**Europäisches Patentamt**

**European Patent Office**

**Office européen des brevets**

(11) Veröffentlichungsnummer: **0 432 294 A1**

# (12) EUROPÄISCHE PATENTANMELDUNG

(21) Anmeldenummer: **89122959.3**

(51) Int. Cl.5 **G01S 3/30**

(22) Anmeldetag: **12.12.89**

(43) Veröffentlichungstag der Anmeldung:
**19.06.91 Patentblatt 91/25**

(84) Benannte Vertragsstaaten:
**DE ES FR GB IT SE**

(71) Anmelder: **LITEF GmbH**
**Lörracher Strasse 18**
**W-7800 Freiburg/Br.(DE)**

(72) Erfinder: **Brüggemann, Arno**
**In den Sigristmatten 3**
**W-7800 Freiburg i.Br.(DE)**
Erfinder: **Lutz, Harald, Dr.**

**Schilfweg 26**
**W-7800 Freiburg i.Br.(DE)**
Erfinder: **Risch, Wolfgang**
**Waldstrasse 7**
**W-7801 Umkirch(DE)**
Erfinder: **Sandner, Norbert, Dr.**
**Schulstrasse 5h**
**W-7800 Freiburg i.Br.(DE)**

(74) Vertreter: **TER MEER - MÜLLER -**
**STEINMEISTER & PARTNER**
**Mauerkircherstrasse 45**
**W-8000 München 80(DE)**

(54) **Verfahren zur Bestimmung des Azimut- und Elevationswinkels der Einfallsrichtung von Hochfrequenzpulsen mittels Monopuls-Amplitudenauswertung.**

(57) Das Verfahren zur Bestimmung des Azimut- und Elevationswinkels der Einfallsrichtung von Hochfrequenzpulsen mittels Monopuls-Amplitudenauswertung und eine dazu angegebene technische Realisierung sehen vor, bei Verwendung eines Satzes von geeigneten Antennen, insbesondere von planaren Spiralantennen, eine Richtungsbestimmung zu einem Emitter in Azimut und Elevation gleichzeitig zu ermöglichen. Dabei wird der gesamte Raumwinkel ($4\pi$) gleichzeitig erfaßt. Das System und die Genauigkeit der Messung sind weitgehend unabhängig von der momentanen Lage des Fahrzeugs; ein Einsatz ist auch in Flugzeugen mit hoher Dynamik möglich.

Beschrieben werden ein Algorithmus zur Raumwinkelbestimmung sowie eine Baugruppenanordnung aus speziellen problemorientierten hochintegrierten Modulen. In einem Simulationsprozeß unter Anwendung des erfindungsgemäß zugrundegelegten rekursiven Algorithmus werden optimale Antennenkonfigurationen untersucht und angegeben.

FIG. 1

## VERFAHREN ZUR BESTIMMUNG DES AZIMUT- UND ELEVATIONSWINKELS DER EINFALLSRICHTUNG VON HOCHFREQUENZPULSEN MITTELS MONOPULS-AMPLITUDENAUSWERTUNG

Die Erfindung betrifft ein Verfahren zur Bestimmung des Azimut- und Elevationswinkels der Einfallsrichtung von Hochfrequenzpulsen mittels Monopuls-Amplitudenauswertung.

Die Bestimmung des Einfallswinkels von elektromagnetischen Wellen (Pulse oder Dauerstrich) ist eine der wesentlichen Aufgaben für Systeme der Elektronischen Kampfführung (EloKa). Sowohl für passive Systeme der Elektronischen Unterstützungsmaßnahmen (EloUm) als auch für aktive Systeme der Elektronischen Gegenmaßnahmen (EloGm) besteht in den meisten Fällen die Notwendigkeit, die Richtung zu dem Emitter zu bestimmen, entweder um den Emitter zu identifizieren oder um gerichtete Gegenmaßnahmen einzuleiten.

Zur Erfassung der Strahlung und der Bestimmung der Einfallsrichtung werden verschiedene Techniken angewendet, die sich an den jeweiligen Systemanforderungen orientieren.

Bei den Empfangsantennen kann man prinzipiell unterscheiden zwischen
- Richtantennen mit kleiner Strahlöffnung, meist mechanisch drehbar, und
- Antennenanordnungen, die einen Empfang und eine Winkelbestimmung aus einem größeren Raumwinkelbereich ohne mechanische Ausrichtung ermöglichen.

Für den Bereich der EloUm-Systeme ist besonders der letztere Typ interessant, da die statistische Empfangswahrscheinlichkeit von Signalen direkt von dem erfaßten Raumwinkelbereich der Antenne abhängt.

Für die Bestimmung des Einfallswinkels der Strahlung werden prinzipiell zwei verschiedene Meßmethoden und deren Kombination eingesetzt:

a) Bestimmung der relativen Phasen in einer ebenen Antennenanordnung

b) Bestimmung der relativen Amplituden von verschiedenen Antennen mit Richtcharakteristik, deren Achsen gegeneinander um einen festen Winkel gedreht sind.

Besonders der zweite Typ hat wegen der relativ einfachen Messungen und Auswertung und wegen des geringen Platzbedarfs und Gewichts eine weite Verbreitung gefunden. Er wird besonders eingesetzt in EloUm-Systemen in kleineren Fahrzeugen und Flugzeugen, z. B. in Radar-Warn-Empfängern oder Empfängern für Störer. Ein Nachteil gegenüber der Phasenmessung liegt jedoch in der allgemein niedrigeren Genauigkeit der Winkelbestimmung.

Bekannte EloUm-Systeme mit Amplitudenauswertung in Monopulsverfahren (vor allem Radar-Warn-Systeme) verwenden im allgemeinen planare Spiralantennen, die sich durch große Breitbandigkeit über mehrere Oktaven bei annähernd konstanter Richtcharakteristik auszeichnen.

Die bisher eingesetzten Systemen verwenden vier oder mehr Antennen, die in einer Ebene angeordnet sind und somit nur den Azimutbereich von 360° abdecken. Ein Fahrzeug kann somit nur den Azimutwinkel zu einem Emitter bestimmen. Zusätzlich wird die Genauigkeit abhängig von der Lage der Antennenebene zur Richtung des Emitters. Schon bei relativen Winkeln von 10 bis 20° treten bei der Messung erhebliche Ungenauigkeiten auf. Diese Ungenauigkeiten bis hin zum völligen Versagen der Meßmethode treten besonders bei Flugzeugen auf, bei denen die Antennenebene durch die Nick- und Rollbewegung einer sehr großen dynamischen Änderung ausgesetzt ist. Die Antennensignale werden bei derzeitigen Systemen in logarithmischen Verstärkern aufbereitet und die Winkelinformation wird dann meist über einfache Verhältnisbildung in analogen Schaltkreisen erhalten.

Ein weiterer Nachteil der ebenen Antennenanordnung ist die Tatsache, daß nur der Azimutwinkel vermessen werden kann, also die Elevation zum Emitter unbekannt ist. Dagegen ist sowohl zum Identifizieren eines Emitters in EloUm-Systemen als auch zum Richten eines Störers in EloGm-Systemen eine Vermessung in Azimut und Elevation erstrebenswert.

Der Erfindung liegt damit die Aufgabe zugrunde, ein Verfahren und eine technische Realisierung anzugeben, um bei Verwendung eines Satzes von geeigneten Antennen (z. B. planarer Spiralantennen) eine Richtungsbestimmung zu einem Emitter in Azimut und Elevation gleichzeitig zu ermöglichen. Dabei soll der gesamte Raumwinkel (4 Pi) gleichzeitig erfaßt werden.

Weiterhin sollen das System und die Genauigkeit der Messung weitgehend unabhängig von der momentanen Lage des Fahrzeugs sein, also auch besonders geeignet für den Einsatz in Flugzeugen mit hoher Dynamik.

Die Erfindung besteht verfahrensmäßig darin, daß zur Bestimmung des Azimut- und Elevationswinkels der Einfallsrichtung von Hochfrequenzpulsen mittels Monopuls-Amplitudenauswertung
- Signale einer Mehrzahl von an einem Fahrzeug (Flugzeug) montierten Antennen in räumlicher Anordnung empfangen werden, die drei stärksten Empfangssignale logarithmischen Verstärkern zugeführt werden und

EP 0 432 294 A1

danach paarweise Differenzverstärkern zur Bildung der logarithmischen Amplitudenverhältnisse zugeführt werden, die anschließend digitalisiert und zusammen mit der Positionsinformation über die betreffende Ursprungsantenne an einen Signalprozessor weitergeleitet werden, und

- in dem Signalprozessor aus den Verhältnissen der Amplituden und der vorgespeicherten Kenntnis der Anordnung der Spiralantennen die räumlichen Empfangswinkel im Koordinatensystem des Fahrzeugs bestimmt werden.

Vorteilhafte Weiterbildungen und Ergänzungen, insbesondere auch vorteilhafte Anordnungen von Antennenkonfigurationen, insbesondere bei der Verwendung von Spiralantennen, sind in Unteransprüchen gekennzeichnet.

Die Berechnung des Winkels muß wegen der Komplexität der Algorithmen mit einem digitalen Signalprozessor erfolgen. Diese Methode erlaubt gleichzeitig das Berechnen von Korrekturtermen in Echtzeit.

Die Erfindung und vorteilhafte Einzelheiten werden nachfolgend unter Bezug auf Zeichnungen und Tabellen näher erläutert. Es zeigen:

Fig. 1 die Blockschaltbilddarstellung eines Systems zur Vorverarbeitung der Signalamplituden;

Fig. 2 das Funktions- und Blockschaltbild eines gemäß der Erfindung zu verwendenden Signalprozessors;

Fig. 3 eine Winkeldarstellung zur Erläuterung der Ermittlung eines Senders mittels einer Antenne mit bestimmter Empfangscharakteristik;

Fig. 4 eine Anordnung zweier Antennen mit Winkeldarstellung zur Winkeldetektion und -berechnung;

Fig. 5 eine graphische Darstellung verwendeter Winkel zur Richtungsbestimmung bei einer N-Antennenkonfiguration;

Fig. 6A bis 6C ein Flußdiagramm mit Kommentaren;

Fig. 7 das Blockdiagramm eines im Rahmen der Erfindung vorteilhaft zu verwendenden Signalprozessors;

Fig. 8 einen Datenflußgraphen zur Berechnung räumlicher Einfallswinkel A, B, bezogen auf Fahrzeug-(Flugzeug)-Koordinaten;

Fig. 9 ein Funktionsschaltbild zur Darstellung der stufenweisen Verzögerung von Parameterdaten;

Fig. 10 ein anderes Funktionsschaltbild zur Darstellung der stufenweisen Verzögerung von Parameteradressen;

Fig. 11 eine dem Datenflußgraphen nach Fig. 8 entsprechende Darstellung zur Erläuterung der Zerlegung in Pipeline-Stufen;

Fig. 12 das Blockdiagramm eines mit Pipelineregister, arithmetischer Funktionseinheit und Speicher ausgerüsteten Moduls (DSP-Modul);

Fig. 13 das Blockschaltbild für eine digitale Signalvorverarbeitung mit DSP-Modulen gemäß einer (nachfolgend erläuterten) Minimallösung;

Fig. 14 den Blockschaltbildaufbau von Matrix-Multiplikationsstufen mit drei Multiplizierer Akkumulator-Bausteinen;

Fig. 15 zwei "Pythagoras"-Prozessoren zur Berechnung von Winkelgrößen $A_N$ und $B_N$;

Fig. 16 Diagramme von einer Spiralantenne für verschiedene Frequenzbereiche;

Fig. 17 eine digitalisierte Empfangscharakteristik (Spiralantenne bei 2 GHz);

Fig. 18 die Tabelle einer Muster-Eingabefile;

Fig. 19 eine Tabellendarstellung der Ausgabe bestimmter gewählter Daten;

Fig. 20 ein Ausdruckbeispiel für sogenannte "Algorithmusfehler" bei Zugrundelegung einer (nachfolgend erläuterten) 10-Antennen-Konfiguration (großer Bereich);

Fig. 21 die Plot-Darstellung (Histogramm) der Verteilung der Algorithmusfehler, wiederum bezogen auf eine 10-Antennen-Konfiguration (großer Bereich);

Fig. 22A, 22B die Plot-Darstellung von Algorithmusfehlern in Extremsituationen bzw. im Horizontbereich, wiederum 10-Antennen-Konfiguration;

Fig. 23 ein erstes Ausführungsbeispiel für eine 8-Antennen-Normalkonfiguration;

Fig. 24 ein Ausführungsbeispiel für eine versetzte 8-Antennen-Konfiguration;

Fig. 25 ein Ausführungsbeispiel für eine doppelt-versetzte 8-Antennen-Konfiguration;

Fig. 26 eine 8-Antennen-Konfiguration mit zwei "Spitzenantennen";

Fig. 27 eine im Sinne der Erfindung vorteilhafte 10-Antennen-Konfiguration;

Fig. 28 ein Tabellenbeispiel für ein Eingabefile zur Gesamtfehleruntersuchung bei einer Spiralantenne bei 8-GHz;

Fig. 29, 30 eine Tabellendarstellung der Ausgabe ausgewählter Daten bei einer 10-Antennen-Konfiguration;

3

Fig. 31 und 32A, 32B Histogramme entsprechend den Fig. 21 und 22A, 22B;

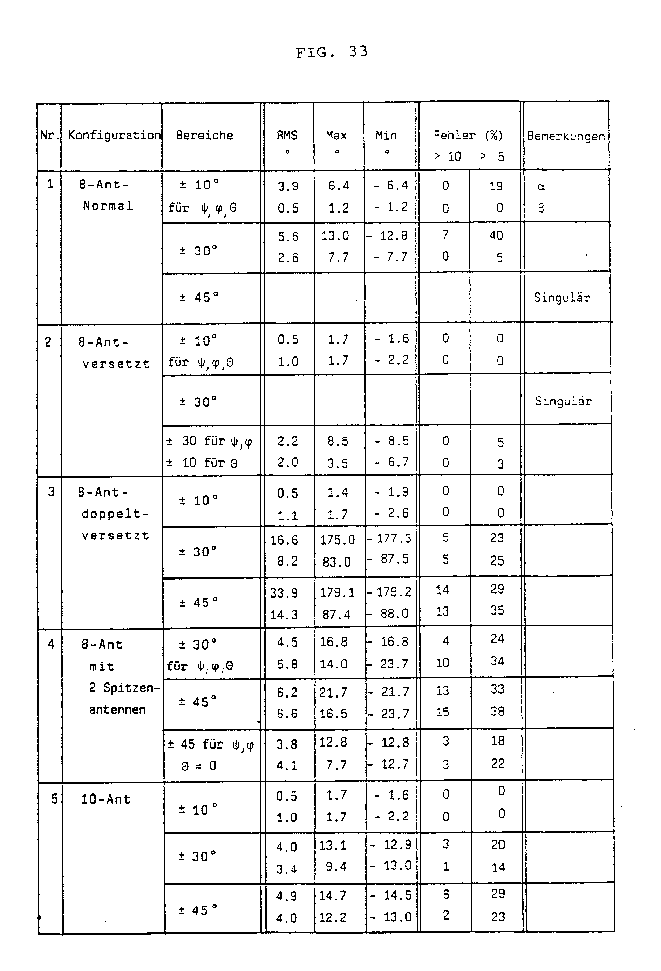

Fig. 33 eine Tabelle zur Darstellung von Algorithmusfehlern; und

Fig. 34 die Tabellendarstellung des Gesamtfehlers für eine 10-Antennen-Konfiguration bei unterschiedlichen Frequenzbereichen.

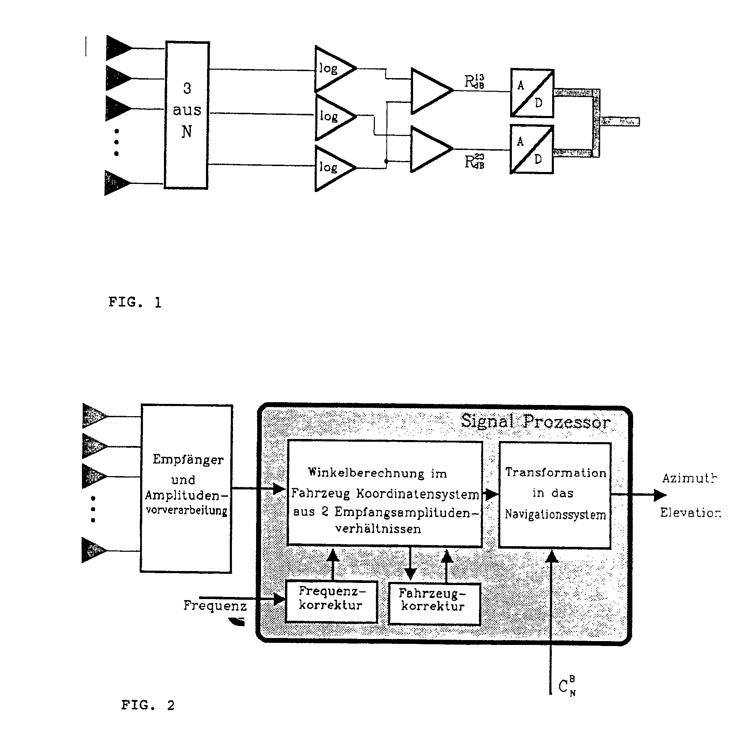

Das erfindungsgemäße Verfahren geht davon aus, daß Signale von Antennen mit geeigneter Empfangscharakteristik, insbesondere mit Gauß'scher Verteilung der Empfangsleistung, in einer räumlichen Anordnung empfangen werden. Die Amplituden der drei stärksten Empfangssignale werden in logarithmischen Verstärkern aufbereitet, und anschließend werden paarweise die Differenzen $R^{13}_{dB}$ und $R^{23}_{dB}$ dieser aufbereiteten Signale gebildet. Diese beiden logarithmischen Amplitudenverhältnisse werden digitalisiert (max. 16 bit Genauigkeit) und zusammen mit der Information über die Ursprungsantennen und der Trägerfrequenz des Signals an den Signalprozessor weitergegeben (Fig. 1 und 2).

In dem Signalprozessor werden aus den Verhältnissen der Amplituden und der Kenntnis der Anordnung der Antennen die räumlichen Empfangswinkel zunächst im Koordinatensystem des Fahrzeugs bestimmt. Anschließend werden von dem Prozessor die Winkel in ein lageunabhängiges Navigationssystem transformiert. In diesem Koordinatensystem wird der Einfallswinkel der Strahlung ausgedrückt als Azimutwinkel relativ zur wahren Nordrichtung und als Elevationswinkel relativ zu einer Ebene tangential zur Erdoberfläche (Fig. 2).

Zur Berechnung der Winkel in diesem Koordinatensystem benötigt der Signalprozessor die Information über die räumliche Lage des Fahrzeugs. Es wird hier angenommen, daß diese Information in Form der Transformationsmatrix vom Körper- zum Navigationssystem ($C^B_N$-Matrix) von entsprechenden (inertialen) Navigationssystemen des Fahrzeugs in Echtzeit zur Verfügung gestellt wird.

Durch die digitale Datenverarbeitung besteht die Möglichkeit, unter Zuhilfenahme der Frequenzinformation aus dem Empfänger etwaige frequenzabhängige Eigenschaften der An tennen (z. B. 3 dB-Breite der Richtcharakteristik) in gewissen Grenzen zu kompensieren. Die Parameter, die im Signalprozessor zur Berechnung der Algorithmen verwendet werden, können in Abhängigkeit der Frequenz der einfallenden Pulse variiert werden.

Da die Algorithmen in einer Stufe rekursiv sind, wird zunächst an einer Stelle eine "Grobschätzung" des Einfallswinkels vorgenommen, die anschließend zur vollen Genauigkeit verfeinert wird. An dieser Stelle können eventuelle fahrzeugspezifischen Korrekturen, die z. B. den Einbauort einzelner Antennen betreffen, angebracht werden. Diese Korrekturen sind in einem Speicher abgelegt und werden in Echtzeit an jedem einzelnen Puls vorgenommen.

Das Verfahren und sein Realisierungskonzept sind vorzugsweise ausgelegt für eine extrem dichte elektromagnetische Umgebung, wie sie in zukünftigen Einsatzszenarien erwartet werden kann. Mit der heute zur Verfügung stehenden Technologie kann eine Verarbeitungsleistung von 3 bis 5 Millionen Pulsen/sec erreicht werden.

Die Erfindung und vorteilhafte Einzelheiten werden nachfolgend und zur Erleichterung des Verständnisses abschnittweise näher erläutert.

Im Kapitel 1 wird zunächst der bisher bekannte Fall für eine ebene Anordnung der Antennen und die Berechnung des reinen Azimutwinkels betrachtet.

Im Kapitel 2 werden die erfindungsgemäße Art der Winkelmessung mit einer räumlichen Antennenanordnung hergeleitet und die Algorithmen zur Richtungsbestimmung in Azimut und Elevation mit einer N-Antennenkonfiguration in einem bestimmten Näherungsverfahren definiert.

Der vollständige Algorithmus, den der Signalprozessor berechnen muß, wird in Form eines Flußdiagramms definiert.

Kapitel 3 beschreibt den Entwurf eines Signalprozessors, der diese Algorithmen in Echtzeit und mit möglichst hoher Datenrate berechnen kann. Für das erwartete Szenario mit mehreren Millionen Pulsen/sec und der Komplexität der zu berechnenden Algorithmen ist der Bau dieses Signalprozessors mit konventionellen Bauteilen oder auch speziellen kommerziellen Signalprozessoren vom Aufwand her (Größe, Gewicht, etc.) nicht mehr zu vertreten, zumal der Einsatz in Flugzeugen oder kleineren Fahrzeugen besondere Beschränkungen auferlegt.

Es wird daher ein Entwurf gezeigt, der mit Hilfe spezieller Signalprozessormodule eine sehr kompakte und daher realisierbare Lösung bietet. Diese Module sind konfigurierbar in ihrer Funktion und daher leicht für bestimmte Anwendungen anpaßbar. Die Module wurden als ASIC (Anwender-Spezifische Integrierte Schaltkreise) definiert und sind daher auch kostengünstig einsetzbar.

Im Kapitel 4 werden die Ergebnisse für eine Rechnersimulation einer erfindungsgemäßen Winkelmessung mit "idealen" und "realistischen" Antennen verwendet. Es werden Hinweise auf günstige Antennenkonfigurationen im Fahrzeug gegeben und die erreichbare Meßgenauigkeit abgeschätzt.

Kapitel 1: Ableitung der Algorithmen zur Winkelberechnung

Dieses erste Kapitel beinhaltet die vollständige Ableitung der Algorithmen zur Berechnung des Azimut- und Elevationswinkels aus den drei stärksten Empfangsamplituden einer räumlichen Antennenkonfiguration.

Zunächst wird ein Überblick über das bisher angewandte Ver fahren mit einer ebenen Antennenanordnung, mit der nur der Azimutwinkel bestimmt werden kann, gegeben. Zusätzlich werden noch bestimmte Optimalitätsbetrachtungen hinsichtlich der Einbaulagen der Antennen angestellt.

Bei einer ebenen Antennenanordnung kann die Richtung einer Radarquelle (Sender) aus den Empfangssignalen zweier verschieden orientierter Antennen bestimmt werden. Dabei macht man sich die winkelabhängige Empfangscharakteristik der einzelnen Antennen zunutze. Die dabei zu erzielende Genauigkeit der Winkeldetektion ist einerseits abhängig von der Geometrie der Antennenanordnung und andererseits von der Empfangscharakteristik der einzelnen Antennen.

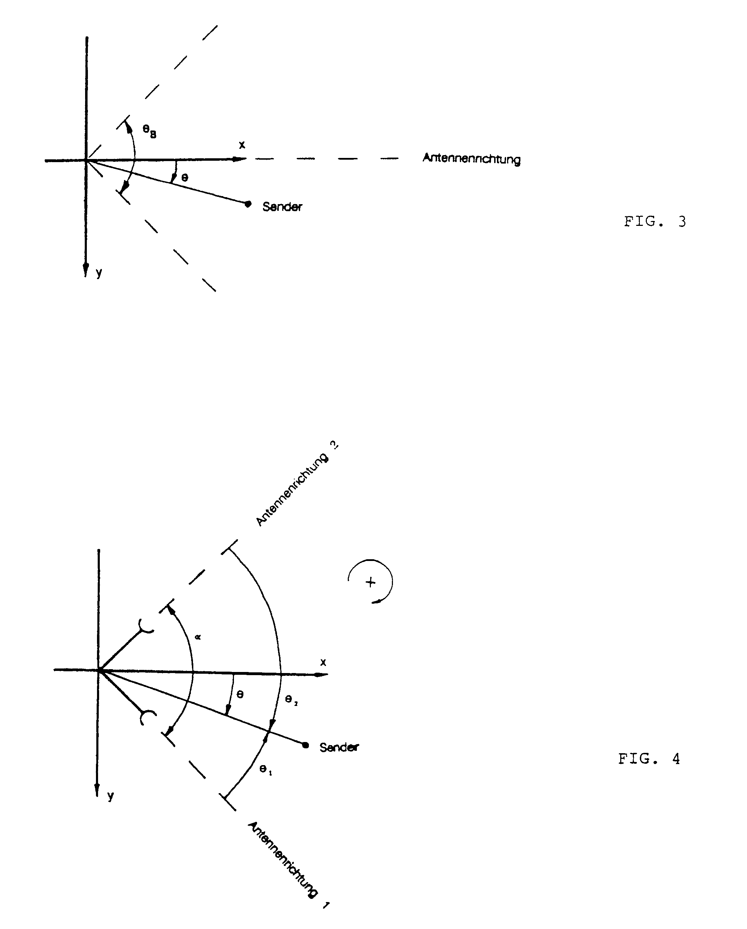

Das Empfangssignal einer für dieses Verfahren geeigneten Antenne soll näherungsweise folgender winkelabhängiger Charakteristik (vgl. Fig. 3) genügen:

$$G(\theta) = A \times e^{-\left(k\frac{\theta}{\theta_B}\right)^2} \qquad (1.1)$$

$G(\theta)$: Empfangssignal
A: Amplitude (abhängig von der Entfernung der Sender)
$\theta$: Winkel zwischen Antennenachse ("boreside") und Einstrahlrichtung
$\theta_B$: 3-dB-Bereich der Antenne
k: Normierungsfaktor

Die Empfangscharakteristik kann also durch eine Gaußfunktion angenähert werden. Der 3-dB-Bereich ist außer vom Antennentyp noch von der Sendefrequenz abhängig. Der Normierungsfaktor k kann aus der 3-dB-Bedingung berechnet werden.

$$G^2\left(\frac{\theta_B}{2}\right) = 0,5 \times G^2(0) \qquad (1.2)$$

$$G\left(\frac{\theta_B}{2}\right) = \sqrt{0,5} \times G(0)$$

$$e^{-\frac{k^2}{2}} = \sqrt{0,5} = \sqrt{\frac{1}{2}}$$

$k^2 = 2 \times \ln 2 = 1{,}386 \qquad (1.3)$

Um aus zwei Empfangssignalen $G_1(R)$ und $G_2(R)$ nach Gleichung (1.1) den Winkel $\theta$ berechnen zu können, müssen die Antennen in einem Winkel $\alpha$ zueinander angeordnet werden (vgl. Fig. 4).

Für die beiden Eingangssignale gilt dann:

$$G_1(\theta) = A \times e^{-\left(k\frac{\theta_1}{\theta_B}\right)^2} = A \times e^{-\left(k\frac{\theta-\alpha/2}{\theta_B}\right)^2} \qquad (1.4a)$$

$$G_2(\theta) = A \times e^{-\left(k\frac{\theta_2}{\theta_B}\right)^2} = A \times e^{-\left(k\frac{\theta+\alpha/2}{\theta_B}\right)^2} \qquad (1.4b)$$

Durch Bildung des logarithmischen Amplitudenverhältnisses $R_{dB}$ mittels logarithmischer Differenzverstärker, d. h.

$$R_{dB} = 20 \ \log \ \frac{G_1(\Theta)}{G_2(\Theta)} \qquad\qquad (1.5a)$$

$$= 20 \ \log \ G_1(\Theta) \ - \ 20 \ \log \ G_2(\Theta) \qquad\qquad (1.5b)$$

wird die Anzahl der zu verarbeitenden Eingangssignale verkleinert und damit der numerische Aufwand verringert. Durch Einsetzen von (1.4a, b) in (1.5b) ergibt sich

$$R_{dB} = 40 \ x \ \log \ e \ x \ \frac{k^2}{\Theta_B^2} \ x \ \alpha \ x \ \Theta \qquad\qquad (1.6)$$

$$\Theta = \frac{\Theta_B}{40 \ x \ \log \ e \ x \ k^2 \ x \ \alpha} \ x \ \sigma_{R_{dB}} \qquad\qquad (1.7)$$

Man erkennt, daß sich durch die Bildung des logarithmischen Verhältnisses das Problem der Winkeldetektion wesentlich vereinfacht hat. Anstatt eines nichtlinearen Gleichungssystems 2. Ordnung (1.5a und 1.5b) ist nur noch die lineare Gleichung (1.7) zu lösen.

Die Konstanten $\Theta_B$ und $\alpha$ können optimal gewählt werden, so daß sich eine größtmögliche Winkelgenauigkeit ergibt.

Für eine Optimalitätsbetrachtung läßt sich unter der Annahme, daß in (1.7) $R_{dB}$ die einzig fehlerbehaftete Größe ist, die Standardabweichung $\sigma_\vartheta$ folgendermaßen berechnen:

$$\sigma_\Theta = \frac{\Theta_B^2}{40 \times \log \ e \ \times \ k^2 \ \times \ \alpha} \ \times \ \sigma_{R_{dB}} \qquad\qquad (1.8)$$

$$\text{Für} \ \sigma_{R_{dB}}^2 \ \text{gilt nach (1.5b)}$$

$$\sigma_{R_{dB}}^2 = \left| \frac{\partial R_{dB}}{\partial G_1} \right|^2 \ \times \ \sigma_{G_1}^2 \ + \ \left| \frac{\partial R_{dB}}{\partial G_2} \right|^2 \ \times \ \sigma_{G_2}^2 \qquad\qquad (1.9)$$

mit $\sigma_{G_1} = \sigma_{G_2} = \sigma_N$ (additives weißes Rauschen zu den Nutzsignalen nach (1.4a, b) und

$$\left| \frac{\partial R_{dB}}{\partial G_i} \right| = 20 \ \times \ \log e \ \times \ \frac{1}{G_i}$$

lassen sich die Standardabweichungen

$$\sigma_{R_{dB}}^2 \ \text{und} \ \sigma_\Theta \ \text{berechnen:}$$

$$\sigma^2_{R\,dB} = 20 \times \log e \times \sqrt{\frac{1}{G_1^2} + \frac{1}{G_2^2}} \times \sigma_N \qquad (1.10)$$

$$\sigma_\Theta = \frac{\Theta_B^2 \times \sqrt{\frac{1}{G_1^2} - \frac{1}{G_2^2}}}{2 \times k^2 \times \alpha} \times \sigma_N \qquad (1.11)$$

Gleichungen (1.10) und (1.11) sind Näherungen, die nur für $G_1(\theta)$, $G_\cdot(\theta) \gg \sigma_N$ gelten.

Für eine Extremwertbetrachtung wird zunächst der Maximalwert von $\sigma_{,}$ in Abhängigkeit von $\theta$ bestimmt:

$$\sigma_\Theta \to \max, \text{ wenn } f(\Theta) = \left(\frac{1}{G_1(\Theta)}\right)^2 + \left(\frac{1}{G_2(\Theta)}\right)^2 \to \max$$

Nach einiger Umformung ergibt sich

$$f(\Theta) = \frac{2}{A^2} \times e^{\left(\frac{2\,k^2}{\Theta_B^2}\left(\Theta^2 + \left(\frac{d}{2}\right)^2\right)\right)} \times \cosh\left(\frac{k^2}{\Theta_B^2} \times \alpha \times \Theta\right)$$

$$(1.12)$$

Die Funktion $f(\theta)$ hat folgende Eigenschaften, die aus den Eigenschaften der Faktorfunktionen erfolgen:
1. $f(\theta)$ hat ein Minimum für $\theta = 0$;
2. außerdem ist die Funktion konvex, so daß Maxima nur an den Intervallgrenzen $\theta = \pm\frac{?}{?}$ liegen können.

Die Genauigkeit der Richtungsbestimmung ist also in Richtung der Antennenachse am geringsten und hat dort die Standardabweichung $\sigma_{\vartheta max}$

$$\sigma_{\Theta_{max}} = \frac{\sqrt{1 + e^{2\left(\frac{k}{\Theta_B}\cdot\alpha\right)^2}}}{2 \times \left(\frac{k}{\Theta_B}\right)^2 \times \Delta \times \alpha} \times \sigma_N \qquad (1.13)$$

Die Minimierung von $\sigma_{\vartheta max}$ bezüglich der Variablen $\alpha$ liefert den optimalen Winkel $\alpha_{opt}$ zwischen den Antennenachsen

$$\frac{\partial\,\sigma_{\Theta max}}{\partial\alpha} = 0$$

Die Lösung dieser Gleichung wurde numerisch durchgeführt und liefert folgendes Ergebnis:
$\alpha_{opt} \approx 0.68 \times \theta_B$ (1.14)
(für $\theta_B = 120^\circ$ folgt $\alpha_{opt} = 81{,}6^\circ$).

Durch Einsetzen von (1.14) in (1.13) erhält man die maximale Standardabweichung für eine optimale Antennenanordnung $\sigma_{\vartheta opt}$

$$\sigma_{opt} \ (\approx) \ 1{,}14 \times \Theta_B \frac{\sigma_N}{A} \qquad (1.15)$$

Die dabei in (1.13) eingesetzten Zahlenwerte sind

$$k^2 = 2\ln 2$$

$$\frac{\alpha}{\theta_B} = \frac{\alpha_{opt}}{\theta_B} \approx 0,68$$

Kapitel 2: Richtungsbestimmung mit einer N-Antennenkonfiguration

Das bisher betrachtete Problem der "ebenen" Antennenanordnung wird in diesem Kapitel um eine Dimension erweitert. Durch eine den gesamten Raum abdeckende Antennenanordnung wird es möglich, außer der bisherigen Berechnung des Azimutwinkels $\alpha$ auch den Elevationswinkel $\beta$ zu berechnen.

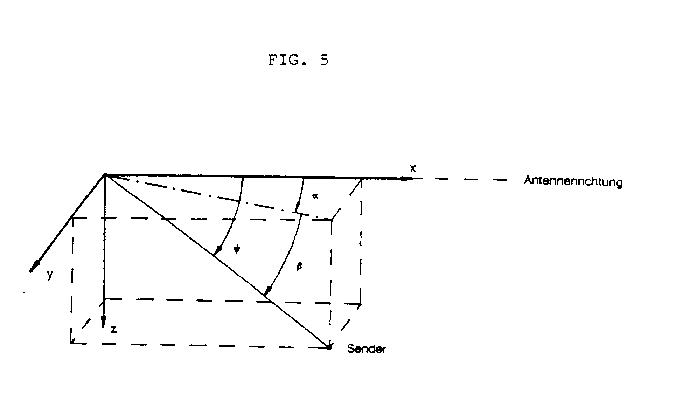

Ausgehend von Gleichung (1.1) läßt sich - unter der Annahme einer rotationssymmetrischen Antennencharakteristik - eine allgemeine Formel für die Empfangscharakteristik angeben (vgl. Fig. 5):

$$G(\psi) = A \times e^{-\left(k\frac{\psi}{\theta_B}\right)^2} \qquad (2.1)$$

$G(\psi)$: Empfangssignal
A: Amplitude
$\psi$: Winkel zwischen Antennenachse und Einstrahlrichtung
k: Normierungsfaktor
$\theta_B$: 3 dB Bereich der Antenne

Der Winkel $\psi$ berechnet sich aus dem "Elevationswinkel" $\beta$ und dem "Azimutwinkel" $\alpha$ durch Verwendung des "Seitenkosinussatzes" für rechtwinklige sphärische Dreiecke:

$$\psi = \arccos(\cos\alpha \times \cos\beta) \qquad (2.2)$$

und damit

$$G(\alpha, \beta) = A \times e^{-\left(k \times \frac{\arccos(\cos\alpha \times \cos\beta)}{\theta_B}\right)^2} \qquad (2.3)$$

($k^2 = 2 \times \ln 2$ wie bisher).

Im folgenden wird eine prinzipielle Möglichkeit zur Winkelberechnung aus drei Empfangssignalen angegeben.

Vorausgesetzt wird, daß die Eingangssignale von N-Antennen, die räumlich angeordnet sind, sowie die Richtungswinkel $\alpha_i$, $\beta_i$ ($i$ = 1 bis N) der Antennen bekannt sind.

Für das ungestörte Empfangssignal der i-ten Antenne gilt dann:

$$G(\alpha, \beta) = A \times e^{-k^2 \times \left(\frac{\arccos(\cos(\alpha-\alpha_i) \times \cos(\beta-\beta_i))}{\theta_B}\right)^2} \qquad (2.4)$$

Zur Vereinfachung der Rechnung werden wieder die logarithmischen Verhältnisse aus den Eingangssignalen gebildet.

$$R\,_{dB}^{ij} \;=\; 20 \;\times\; \log \;\times\; \frac{G_1\,(\alpha,\beta)}{G_2\,(\alpha,\beta)} \qquad (2.5)$$

$$R\,_{dB}^{ij} \;=\; g_{ij}\,(\alpha,\,\beta)$$

$$=\; const_1 \;\times\; \Big[\; arccos\;(\cos(\alpha\text{-}\alpha_j)\times\cos(\beta\text{-}\beta_j)) \qquad (2.6)$$

$$-\,arccos\;(\cos(\alpha\text{-}\alpha_i)\times\cos(\beta\text{-}\beta_i))\,\Big]$$

$$const_1 \;=\; 20\;x\;\log e\;x\;\frac{k^2}{\Theta_B} \;\triangleq\; \text{"Normierungskonstante"}$$

Zur Berechnung der Winkel $\alpha$ und $\beta$ werden zwei dieser log Verhältnisse $R_{dB}^{ij}$ benötigt.

Der Einfachheit halber werden an dieser Stelle einige Vereinbarungen getroffen:

- Der Index 3 bezeichnet diejenige Antenne, welche das stärkste Eingangssignal liefert;
- zur Berechnung der Winkel $\alpha$ und $\beta$ werden zwei Verhältnisse $R_{dB}^{ij}$ verwendet;
- das stärkste Signal wird doppelt verwendet (d. h. $R_{dB}^{13}$ und $R_{dB}^{23}$ ).

Die Aufgabe, aus $R_{dB}^{13}$ und $R_{dB}^{23}$ sowie den Funktionsvorschriften $g_{13}\,(\alpha,\,\beta)$ $g_{23}\,(\alpha,\,\beta)$, die Winkel $\alpha$ und $\beta$ zu bestimmen, läßt sich als Problem der Lösung eines nichtlinearen Gleichungssystems 2. Ordnung auffassen. Eine geeignete Formulierung dieses Gleichungssystems lautet:

$f_1\,(\alpha,\,\beta) = R\,_{dB}^{13} - g_{13}\,(\alpha,\,\beta) = 0$

$f_2\,(\alpha,\,\beta) = R\,_{dB}^{23} - g_{23}\,(\alpha,\,\beta) = 0$  (2.7)

$R_{dB}^{13}$ , $R_{dB}^{23}$ : Messung/Funktionswerte

$g_{13}\,(\alpha,\,\beta)$, $g_{13}\,(\alpha,\,\beta)$: Funktionsvorschriften der Antennencharakteristiken (nach 2.6)

Eine geschlossene Lösung dieses Gleichungssystems ist nicht möglich, weshalb in der Literatur meist iterative Verfahren zur Lösung vorgeschlagen werden.

Als Beispiel sei hier die Iterationsvorschrift eines Verfahrens angegeben, das von Newton stammt:

$$\begin{bmatrix} \alpha \\ \beta \end{bmatrix}_{k+1} \;=\; \begin{bmatrix} \alpha \\ \beta \end{bmatrix}_{k} \;-\; \Big[ D\,\underline{f}\,(\alpha,\,\beta) \Big]_{k}^{-1} \; \begin{bmatrix} f_1(\alpha,\,\beta) \\ f_2(\alpha,\,\beta) \end{bmatrix}_{k} \qquad (2.8)$$

mit

$$\Big[ D\,\underline{f}\,(\alpha,\,\beta) \Big] \;=\; \begin{bmatrix} \dfrac{\partial f_1(\alpha,\,\beta)}{\partial\alpha} & \dfrac{\partial f_1(\alpha,\,\beta)}{\partial\beta} \\[2ex] \dfrac{\partial f_1(\alpha,\,\beta)}{\partial\alpha} & \dfrac{\partial f_1(\alpha,\,\beta)}{\partial\beta} \end{bmatrix} \qquad (2.9)$$

Fur eine möglichst schnelle und mittelgenaue Berechnung von $\alpha$ und $\beta$ scheidet ein derartiger Algorithmus wegen des großen Aufwands aus.

Eine andere Möglichkeit ist, eine geeignete Approximation für $S_{ij}\,(\alpha,\,\beta)$ zu wählen, die es erlaubt, das Gleichungssystem (2.7) nach $\alpha$ und $\beta$ aufzulösen. Die berechneten Werte können dann zur Verbesserung der Approximation verwendet werden.

Dieser zweite Weg wird hier eingeschlagen.

Zur Formulierung des Berechnungsalgorithmus wird zunächst von einer Polynomapproximation der Empfangscharakteristik ausgegangen, da eine Empfangscharakteristik nach Gleichung (2.3) eine geschlossene Berechnung der Winkel $\alpha$ und $\beta$ nicht zuläßt. Für $\psi$ (bzw. $\psi^2$) in (2.2) wurde folgender Polynomansatz zugrundegelegt:

$$\psi^2 = (\text{arccos } [\cos \alpha \times \cos \beta])^2 \approx c_0 + c_1 \alpha^2 + c_2 \beta^2 + c_3 \alpha^2 \beta^2 \qquad (2.10)$$

Die Koeffizienten $c_i$ werden nach folgenden Gesichtspunkten bestimmt:

1. rotationssymmetrische Funktion;

2. exakt richtig für $\alpha = 0$ und $\beta = 0$;

3. möglichst über den gesamten Bereich soll eine gute Approximation erreicht werden ("Toleranzbandjustierung").

Zu 1.) Rotationssymmetrie $c_1 = c_2$

Zu 2.) $\beta = 0$

$$\psi^2 = (\text{arccos } [\cos \alpha \times \cos \sigma ])^2 = c_0 + c_1 \alpha^2 = \alpha^2$$

für $c_0 = 0$ und $c_1 = 1$

Zu 3.) Die Berechnung der Konstanten $c_3$ ist abhängig von der Wahl eines geeigneten Approximationspunkts $(\alpha_0, \beta_0)$.

$$\text{arccos } \left[ \cos \alpha_0 \times \cos \beta_0 \right]^2 = \alpha_0^2 + \beta_0^2 + c_3 \ \alpha_0^2 + \beta_0^2$$

$$\frac{\left( \text{arccos} \left( \cos \ \alpha_0 \ \times \ \cos \beta_0 \right) \right)^2 - \alpha_0^2 - \beta_0^2}{\alpha_0^2 + \beta_0^2} \qquad (2.11)$$

Erfindungsgemäß werden $\alpha_0$ und $\beta_0$ so groß gewählt wie die größten Winkeldifferenzen der gewählten Antennenkonfiguration.

Die berechneten Koeffizienten in (2.2) und (2.3) eingesetzt ergibt:

$$\psi^2 \approx \alpha^2 + \beta^2 + c_3 \ \alpha^2 \times \beta^2 \qquad (2.12)$$

$$G(\alpha, \beta) \approx A \times e^{-\left( k \ \frac{\alpha^2 + \beta^2 + c_2 \ \alpha^2 + \beta^2}{\theta_B} \right)^2} \qquad (2.13)$$

Für die Formulierung des Algorithmus besteht die Aufgabe jetzt darin, aus den gegebenen Eingangssignalen sowie der ungefähren Kenntnis der Antennencharakteristik näherungsweise die Winkel $\alpha$ und $\beta$ im Navigationssystem zu bestimmen.

Besonderes Augenmerk muß dabei auf die Anzahl der benötigten Operationen gelegt werden, um den Anforderungen eines Echtzeitsystems gerecht zu werden.

Der Algorithmus besteht aus drei Teilen:

1. Winkelberechnung relativ zur Richtung der Antenne mit dem stärksten Eingangssignal (Index = 3);

2. Winkelberechnung im Body-System;

3. Winkelberechnung im Navigations-System.

1. Winkelberechnung relativ zur Richtung der Antenne mit dem stärsten Eingangssignal:

Unter Verwendung der Näherungen des letzten Abschnitts ergibt sich für $R_{dB}^{ij}$ (entsprechend 2.6):

$$R_{dB}^{ij} = g_{ij} (\alpha,\beta) = \text{const}_1 \times [2 \times \Delta\alpha_{ij} \ \alpha + \times \Delta\beta_{ij} \ \beta - \Delta^2\alpha_{ij} - \Delta^2\beta_{ij} - \Delta\text{cor}_{ij} (\alpha,\beta) ] \qquad (2.14)$$

mit

$$\Delta\text{cor}_{ij} (\alpha,\beta) = [ (\alpha - \alpha_i)^2 \times (\beta - \beta_i)^2 - (\alpha - \alpha_i)^2 \times (\beta - B_i)^2 ]$$

$= \text{cor}_i - \Delta\text{cor}_j$     (2.15)

und den Schreibweisen

$\Delta\alpha_{ij} = \alpha_i - \alpha_j$     (2.16a)

$\Delta\beta_{ij} = \beta_i - \beta_j$     (2.16b)

$\Delta^2\alpha_{ij} = \alpha_i^2 - \alpha_j^2$     (2.16c)

$\Delta^2\beta_{ij} = \beta_i^2 - \beta_j^2$     (2.16d)

Alle Winkel sind relativ zu $\alpha_3$ und $\beta_3$ zu nehmen.

Damit läßt sich - bis auf die zunächst noch unbekannten Korrekturterme - ein lineares Gleichungssystem aufstellen mit:

$c_i + R_{dB}^{13} + \text{const}_1 \, (\Delta^2\alpha_{i3} + \Delta^2\beta_{i3} + \Delta\text{cor}_{i3})$     (2.17a)

$\lambda_{i1} = 2 \times \text{const}_1 \times \Delta\alpha_{i3}$     (2.17b)

$\lambda_{i2} = 2 \times \text{const}_1 \times \Delta\beta_{i3}$     (2.17c)

und: $i = 1,2$

$$\begin{bmatrix} c_1 \\ c_2 \end{bmatrix} = \begin{bmatrix} \lambda_{11} & \lambda_{12} \\ \lambda_{21} & \lambda_{22} \end{bmatrix} \begin{bmatrix} \alpha \\ \beta \end{bmatrix} \qquad (2.18)$$

Dieses Gleichungssystem hat die Lösung

$\alpha = \frac{1}{D} \times (c_1 \, \lambda_{22} - c_2 \, \lambda_{12})$     (2.19a)

$\beta = \frac{1}{D} \times (c_2 \, \lambda_{11} - c_1 \, \lambda_{21})$     (2.19a)

$D = \lambda_{11} \times \lambda_{22} - \lambda_{12} \times \lambda_{21}$     (2.19c)

Der Berechnungsalgorithmus ist nicht anwendbar, wenn die Determinante $D = 0$ sehr klein wird. Diese Fälle sind aber a priori bekannt, da sie ausschließlich von der gewählten Antennenkonfiguration abhängen. Durch geeignete Maßnahmen bei der Antennenkonfiguration und Antennenauswahl läßt sich der Fall $D = 0$ daher ausschließen.

Zur groben Berechnung der Winkel $\alpha$ und $\beta$ werden die Korrekturen $\Delta\text{cor}_{i3}$ zu Null gesetzt:

$\Delta\text{cor}_{i3} = 0$     (2.20)

Nach der ersten Berechnung des Wertepaars $\alpha$ und $\beta$ nach (2.19a, b) können die Korrekturen $\Delta\text{cor}_{i3}$ bestimmt werden. Die Gleichungen (2.19a, b) wurden dann erneut ausgeführt.

2. Winkelberechnung im Body-System $\alpha: = \alpha + \alpha_3$     (2.21a)

$\beta: = \beta + \beta_3$     (2.21b)

Da mit einer Transformationsmatrix nur Vektoren und keine Winkel transformiert werden können, muß zuerst ein Richtungsvektor generiert werden.

$$\underline{v}^b = \begin{bmatrix} \cos\alpha \times \cos\beta \\ \sin\alpha \times \cos\beta \\ \sin\beta \end{bmatrix} \qquad (2.22)$$

Dieser Vektor wird in das Navigations-System transformiert

$$\underline{v}^n = \begin{bmatrix} x \\ y \\ z \end{bmatrix}^n = \underline{c}_B^N \times \underline{v}^b \qquad (2.23)$$

Aus dem Vektor werden wieder die Winkel berechnet

$$\alpha \; : \; \arctan \; \frac{y}{x} \qquad\qquad (2.24)$$

$$\beta \; = \; \arctan \; = \; \frac{z}{\sqrt{x^2 + y^2}} \qquad\qquad (2.25)$$

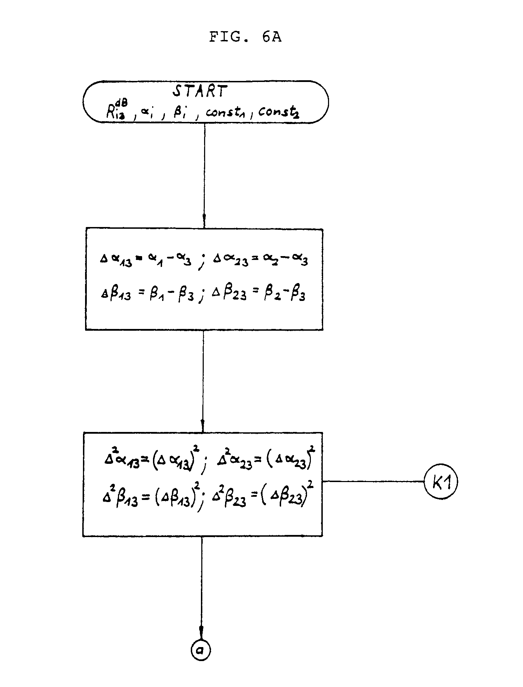

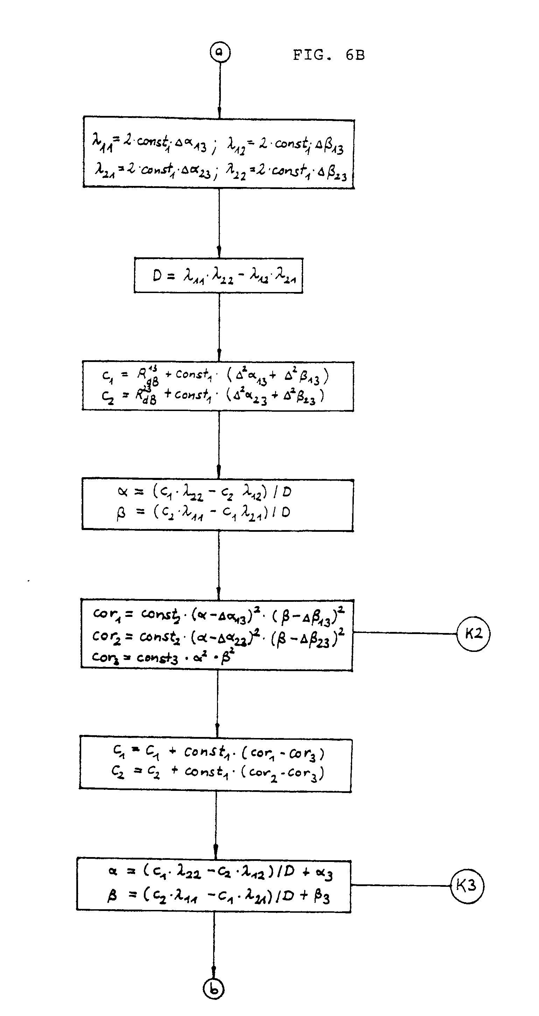

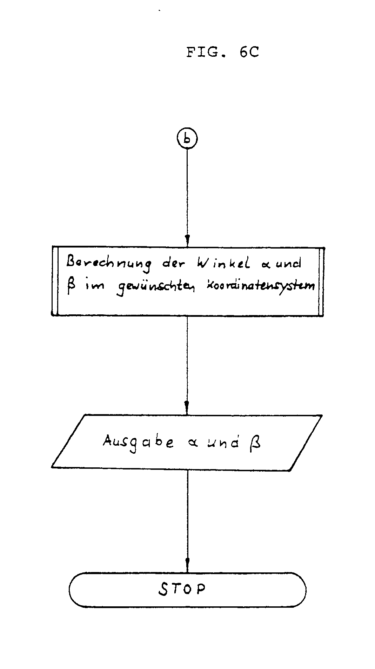

Damit ist der Algorithmus vollständig beschrieben. Ein Flußdiagramm mit für den Fachmann ausreichenden Kommentaren und die Erläuterung der Schwierigkeiten, die sich insbesondere daraus ergeben, daß die Winkel zunächst relativ zu $\alpha_3$, $\beta_3$ berechnet werden, zeigen die Fig. 6A bis 6C.

Zum besseren Verständnis des Algorithmus seien folgende Be merkungen ergänzt:

K1: Die absoluten Winkel $\alpha_i$ und $\beta_i$ in den Gleichungen (2.14) bis (2.18) werden durch die Winkel relativ zu $\alpha_3$, $\beta_3$ ersetzt.

$\alpha_i \; -----> \; \Delta\alpha_{i3} \; = \; \alpha_i - \alpha_3$

$\beta_i \; -----> \; \Delta\beta_{i3} \; = \; \beta_i - \beta_3$

$\alpha_3 \; -----> \; 0$

$\beta_3 \; -----> \; 0$

$\Delta\alpha_{i3} \; -----> \; \Delta\alpha_{i3}$

$\Delta\beta_{i3} \; -----> \; \Delta\beta_{i3}$

$\Delta^2\alpha_{i3} \; = \; \alpha_i^2 - \alpha_3^2 \; -----> \; (\Delta\alpha_{i3})^2$

$\Delta^2\beta_{i3} \; = \; \beta_i^2 - \beta_3^2 \; -----> \; (\Delta\beta_{i3})^2$

K2: $const_2 \; \hat{=} \; c_3$

K3: Zusätzliche Addition von $\alpha_3$, $\beta_3$

Durch Normierung der Signale $R_{i3}^{\alpha\beta}$ (Verstärkung mit 1/const1) kann die Konstante const1 im gesamten Algorithmus wegfallen. Dadurch könnte eine zusätzliche Vereinfachung erzielt werden.

Kapitel 3: Entwurf eines Signalprozessors

Im folgenden wird eine erfindungsgemäße Hardware-Realisierung für die erläuterten Algorithmen beschrieben.

Der überwiegende Teil der beschriebenen Algorithmen läßt sich mit herkömmlichen Mikroprozessoren oder digitalen Signalprozessoren nicht - oder nur mit extrem hohem Aufwand an Hardware, Verlustleistung und Platzbedarf - realisieren.

Der geforderte Datendurchsatz übersteigt die Rechenleistung einzelner Mikroprozessoren (neuester Technologie) um ein Vielhundertfaches. Die Implementierung in einem Mehrprozessorsystem scheitert schon daran, daß die Synchronisation und der Datenaustausch der Prozessoren untereinander bei dem geforderten Datendurchsatz nicht mehr bewältigt werden kann.

**Abschätzung:**

Mit einer konventionellen Architektur sind zur Implementierung der Algorithmen ca. 230 Operationen nötig, davon sind etwa 80 mathematische Funktionen und Grundoperationen, der Rest entfällt auf Speicherzugriffe. Selbst unter der vereinfachenden Annahme, daß jede Funktion und jeder Speicherzugriff in einer Elementaroperation ausgeführt wird, ergibt sich bei einem Datendurchsatz von 5 MHz eine erforderliche Rechenleistung von mehr als $1{,}1 \cdot 10^9$ Operationen/Sekunde.

Spezielle digitale Signalprozessoren zur Implementierung von Filteralgorithmen sind in ihrer Struktur zu sehr fixiert auf die Realisierung bekannter, "exakter" Algorithmen (z. B. FIR-Filter, FFT) bzw. deren Grundoperationen und daher zur Implementierung der hier vorgeschlagenen Näherungslösungen nicht geeignet. Lediglich zur Koordinatentransformation können solche Komponenten in dieser Anwendung eingesetzt werden.

Die direkte Hardwareimplementierung der Algorithmen mit verfügbaren Bausteinen in einer angepaßten Datenflußstruktur ist prinzipiell möglich, erfordert aber ebenfalls einen untragbar hohen Hardwareaufwand.

Der Lösungsansatz gemäß der Erfindung führt zur Höherintegration von Funktionen und damit zu speziellen Hardwarekomponenten, die eine effiziente Implementierung von Algorithmen der hier beschriebenen Art in geeigneter Form ermögli chen.

Dieser Lösungsweg wird nachfolgend im Detail beschrieben.

Für die Hardwareimplementierung der Algorithmen wird zunächst angenommen, daß sich alle Werte und Parameter als vorzeichenbehaftete Festkommazahlen darstellen lassen, wobei der gesamte Wertebereich mit maximal 16 Bit Wortbreite abgedeckt werden kann.

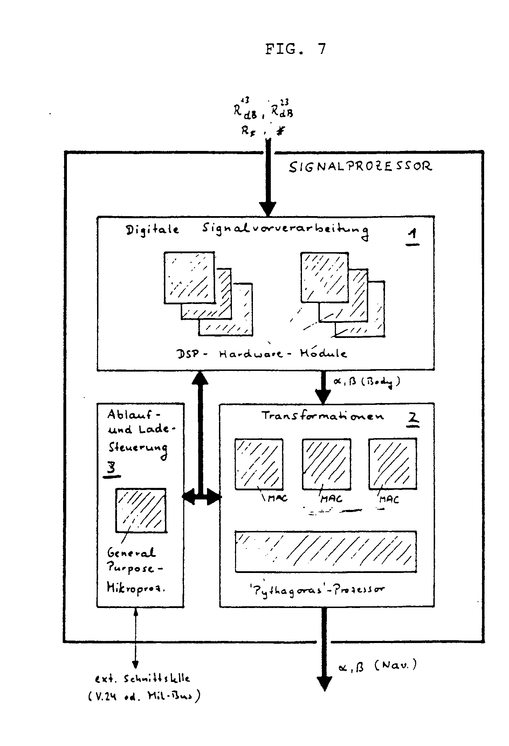

Aus den dargestellten Vorüberlegungen resultiert die in Fig. 7 gezeigte Grobstruktur des Signalprozessors mit folgenden Baugruppen:

**Digitale Signalvorverarbeitung (Baugruppe 1):**

Dieser Teil berechnet die Winkel A, B, bezogen auf Fahrzeug-(Flugzeug)Koordinaten. Aufgrund der hohen Anforderungen bezüglich des Datendurchsatzes und der Abhängigkeit der Algorithmen von Echtzeitparametern wird dieser Teil mit einer zugeschnittenen Datenflußarchitektur direkt in Hardware implementiert. Um dies mit vertretbarem Aufwand zu ermöglichen, werden spezielle Hardwaremodule definiert, die eine effiziente Implementierung komplexer Algorithmen der beschriebenen Art unterstützen.

**Transformationen (Baugruppe 2):**

Die weiteren Berechnungen zur Koordinatentransformation ins erdfeste, nordbezogene Navigationssystem können mit Hilfe von verfügbaren Hardwarekomponenten und digitalen Signalprozessoren neuester Technologie und Architektur realisiert werden.

**Ablauf und Ladesteuerung (Baugruppe 3):**

Zur allgemeinen Initialisierung, d. h. zur Versorgung der Verarbeitungseinheiten mit entsprechenden Parametern, sowie zur Nachkalibration von flugzeugabhängigen Korrekturgliedern, kann ein herkömmlicher universeller Mikrorechner eingesetzt werden. Die Parameter können gegebenenfalls über eine externe Schnittstelle (z. B. Mil-Bus, SDLC ...) geladen werden.

Diese Baugruppen werden nachfolgend hinsichtlich ihrer Feinstruktur weiter erläutert.

**Baugruppe 1: Digitale Signalvorverabeitung**

Der eigentliche Engpaß bei der direkten Hardwareimplementierung von Algorithmen der erläuterten Art auf konventionellen Mikrorechnern (mit von-Neumann-Architektur) entsteht durch den notwendigen Zeitaufwand zum Transport von Daten zwischen Speicher und CPU. In der Regel enthält die CPU nur eine Verarbeitungseinheit (ALU).

Dieser Engpaß kann vermieden werden, wenn die Struktur der Hardwareimplementierung dem Datenfluß der Aufgabe angepaßt wird und außerdem mehrere Verarbeitungseinheiten gleichzeitig zur Ausführung von Rechenoperationen bereitgestellt werden. Allerdings ist zur Implementierung einer solchen Datenflußarchitektur in der Regel ein erheblicher Hardwareaufwand nötig.

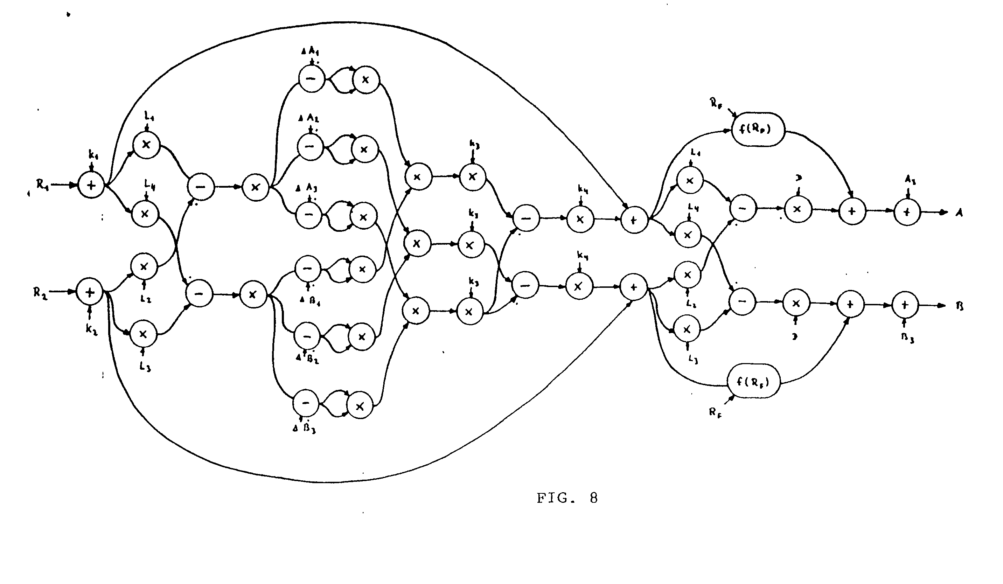

Die durch den Algorithmus vorgegebenen Operationen und Datenabhängigkeiten lassen sich anschaulich in einem Datenflußgraphen gemäß Fig. 8 darstellen. Die auszuführenden Operationen erscheinen darin als Knoten; Datenabhängigkeiten sind als gerichtete Kanten abgebildet. In einer direkten Hardwareimplementierung werden Knoten (Operationen) durch entsprechende Funktionseinheiten, Kanten durch Datenpfade und Datenquellen bzw. -senken mit Speicherelementen (Registern) realisiert.

Fig. 8 zeigt den Datenflußgraphen für den oben beschriebenen Algorithmus zur Berechnung der Winkel A, B, bezogen auf Fahrzeug-(Flugzeug)Koordinaten.

Bei der Umsetzung dieses relativ komplexen Algorithmus in eine Hardwarerealisierung müssen weitere Aspekte berücksichtigt werden:

- Die Laufzeiten in realen Funktionseinheiten lassen es nicht zu, die gesamte Berechnung (gemäß dem Datenflußgraph in Fig. 8) in einem einzigen Zeitintervall von z.B. 330 ns (bei 3 MHz Datenrate) auszuführen. Vielmehr muß eine sinnvolle Unterteilung in mehrere Stufen vorgenommen werden, die durch Hilfsregister entkoppelt werden (Pipelining). Die maximal zulässige Laufzeit einer Stufe ist durch den gewünschten Datendurchsatz vorgegeben.

- Diese Zerlegung bewirkt, daß die Eingabewerte nacheinander verschiedene Stufen der Verarbeitung durchlaufen. Zwischen der Eingabe von Daten und der Ausgabe der zugehörigen Ergebnisse liegt daher eine Zeitspanne (= Stufenzahl x Laufzeit pro Stufe). Im eingeschwungenen Zustand befinden sich gleichzeitig mehrere Eingabedaten in unterschiedlichen Stufen der Verarbeitung.

- Der Algorithmus ist abhängig von Parametern, deren Werte sich in Echtzeit, d. h. mit der Frequenz der eigentlichen Eingabedaten, ändern können.

13

Diese Abhängigkeit von Echtzeitparametern und die entsprechende Hardwarerealisierung wird im folgenden beschrieben.

Die Parameterwerte in den Algorithmen sind abhängig von der Auswahl der im obigen Beispiel drei Antennen, deren Signale jeweils ausgewertet werden. Verschiedene Parameter sind außerdem abhängig vom Frequenzbereich der empfangenen Signale. Folglich können sich die Parameterwerte mit jedem zu verarbeitenden Signalpuls ändern.

Die Parameter werden gemäß der Erfindung für alle vorkommenden Konfigurationen vordefiniert, in Tabellen gespeichert und zur Signalverarbeitung in Echtzeit entsprechend adressiert und ausgelesen.

In einer gewählten 10-Antennen-Konfiguration gibt es 120 Moglichkeiten zur Auswahl von drei (aus zehn) Antennen. Für die frequenzabhängigen Parameter ist eine Unterscheidung von acht Frequenzbereichen vorgesehen, so daß hier insgesamt 120 * 8 = 960 Kombinationen vorkommen können. Geeignete Bausteine zur Abspeicherung der Parameter sind Festwertspeicher (ROMs) oder Schreib/Lese-Speicher (RAMs) mit 1K Worten bzw. 128 Worten Tiefe. Solche Speicherbausteine sind mit sehr kurzen Zugriffszeiten verfügbar.

Das oben mit Bezug auf Fig. 8 beschriebene Pipelining bei der Verarbeitung der Meßwerte hat auch Einfluß auf die Adressierung der Parameter. Die Verarbeitung eines Signals erfolgt in zeitlich aufeinanderfolgenden Teilschritten in verschiedenen Stufen der Pipeline. Bei jedem Teilschritt zur Verarbeitung eines Meßwerts müssen die Parameterwerte adressiert werden, die die Konfiguration bei der Erfassung des Meßwerts charakterisieren.

Dies kann auf zwei Arten - abhängig von der Anordnung der Parameterspeicher - realisiert werden.

a) Mit der Eingabe eines Meßwerts werden alle zugehörigen Parameter - in einem Speicher - gemeinsam adressiert. Die ausgelesenen Parameterdaten werden über Register verzögert den entsprechenden Pipelinestufen zugeführt, in denen sie zur Verarbeitung mit den zugehörigen Meßwerten gebracht werden (Fig. 9).

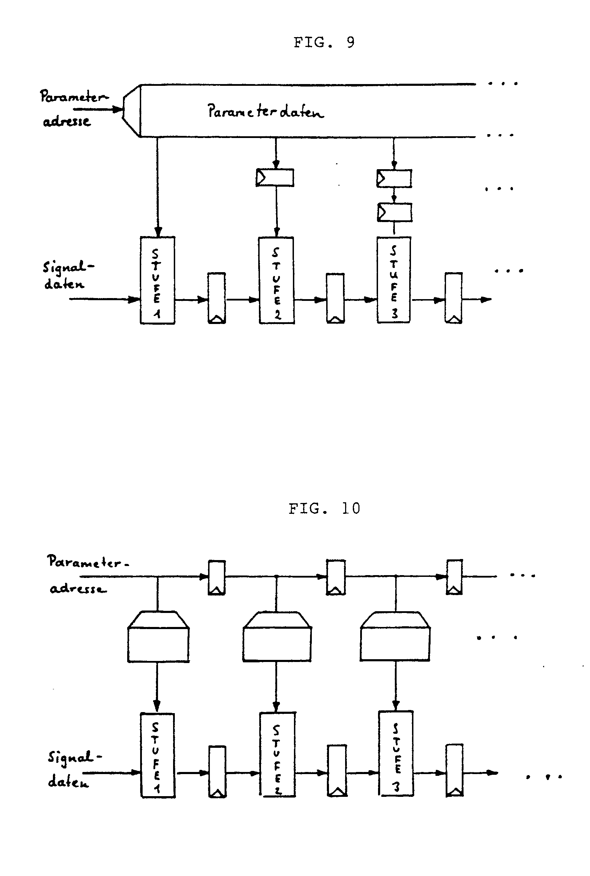

b) Die Parameterspeicher werden direkt den Pipelinestufen zugeordnet, in denen ihr Inhalt verarbeitet wird. Mit der Eingabe eines Meßwerts wird auch die zugehörige Parameteradresse in den Signalprozessor eingegeben. Die Parameteradresse wird dann über Registerstufen zusammen mit den berechneten Teilergebnissen in der Pipeline weitertransportiert, wobei in jeder Stufe die zugehörigen Parameterspeicher adressiert und ausgelesen werden (Fig. 10).

Bei Lösung b) müssen Parameterspeicher (mit demselben Inhalt) gegebenenfalls mehrfach vorhanden sein, wenn dieselben Parameter in verschiedenen Stufen benötigt werden.

Dagegen erfordert die Lösung a) im allgemeinen eine sehr viel größere Zahl von Pipelineregistern.

Die folgende Aufwandsabschätzung gilt für eine direkte Hardwareimplementierung einer Datenflußstruktur (nach Fig. 8) unter Verwendung von diskreten Hardwarekomponenten.

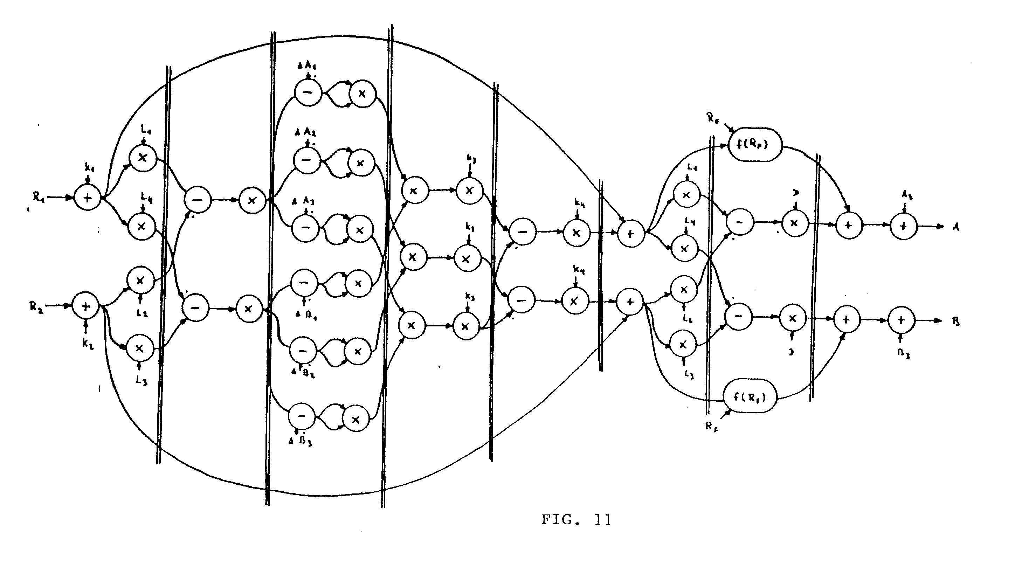

Zur Realisierung der zeitlichen Anforderungen werden, wie in Fig. 11 gezeigt, acht Pipelinestufen eingeführt.

Damit errechnet sich der Hardwareaufwand wie folgt:

| Funktionseinheiten: | |
| --- | --- |
| 26 | 16*16 bit Multiplizierer |
| 20 | 16 bit Addierer/Subtrahierer |
| 68 | 8 bit Register (Pipeline) |

**Parameterspeicher:**
Lösung a)
4 Speicher 1k x 8 bit
30 Speicher 128 x 8 bit
134 8 bit Register (Pipeline)
oder
Lösung b)
4 Speicher 1k x 8 bit
40 Speicher 128 x 8 bit
14 8 bit Register (Pipeline)
**Korrekturterme:**
4 Speicher 64k x 8 bit (ROM)
8 Register (Pipeline)

**Gesamtaufwand:**

Lösung a) 294 Bausteine

Lösung b) 184 Bausteine

Weitere Bausteine sind zur Realisierung einer Ladeschnittstelle erforderlich, falls die Parameter nicht in Festwertspeichern, sondern in Schreib/Lese-Speichern abgelegt werden.

Die Implementierung mit Standardbausteinen erfordert einen extrem hohen Hardwareaufwand und damit auch Platzbedarf und Verlustleistung. Für die vorgesehene Anwendung ist dieser Aufwand kaum tragbar, wenn man berücksichtigt, daß damit nur ein Teil des gesamten Algorithmus abgedeckt ist.

Der Aufwand läßt sich merklich reduzieren, wenn mehrere Funktionen auf einem Baustein integriert werden. Dieser Ansatz führt zur Entwicklung spezieller Hardwarekomponenten, die eine effiziente Implementierung derartiger Algorithmen ermöglichen. Dieser Lösungsweg wird nachfolgend beschrieben.

Um dem angestrebten Ziel einer Realisierung mit speziellen Hardware-Modulen näher zu kommen, wurde bei einer Untersuchung des Datenflußgraphen für den erläuterten Algorithmus (Fig. 8) zunächst erkannt, daß sich wiederholt ähnliche Teilstrukturen zeigen, d. h. Kombinationen von Grundoperationen, die mehrfach im Algorithmus vorkommen. Heute verfügbare Technologien erlauben die Integration mehrerer derartiger Grundfunktionen auf einem Baustein. Das wesentliche Problem besteht darin, eine geeignete Kombination von Funktionen zu definieren, die sich vorteilhaft auf einem Baustein integrieren lassen.

Dabei sind folgende Aspekte zu berücksichtigen:

- Die Algorithmen sollen mit möglichst wenigen Bausteinen effizient implementiert werden können.
- Es sollen möglichst wenig verschiedenartige Bausteine, im Idealfall nur Bausteine eines Typs, zum Einsatz kommen.
- Der (die) Baustein(e) müssen flexibel genug sein, um spätere Modifikationen im Algorithmus oder andere vergleichbare Anwendungen realisieren zu können.
- Der (die) Baustein(e) müssen sich mit verfügbarer Technologie realisieren lassen.

Diese Forderungen sind zum Teil gegensätzlich, so daß ein geeigneter Kompromiß gefunden werden muß (z. B. wenige Bausteine, hohe Integrationsdichte <-> Flexibilität).

Aus den Datenflußgraphen bzw. dem Flußdiagramm für den Algorithmus lassen sich die folgenden, häufig vorkommenden Grundfunktionen extrahieren:

1) $Y = (X \pm P_1) * P_2$

2) $Y = (X_1 \pm X_2) * P$

3) $Y = (X \pm P)^2$

4) $Y = X_1 * X_2$

Weitere vorkommende Grundfunktionen sind daraus abgeleitete Spezialfälle (z. B. $Y = X^2$).

Dabei sind P (bzw. $P_i$) vordefinierte Parameter und X (bzw. $X_i$) Eingabedaten, d. h. Signaldaten oder Zwischenergebnisse aus vorherigen Teilberechnungen.

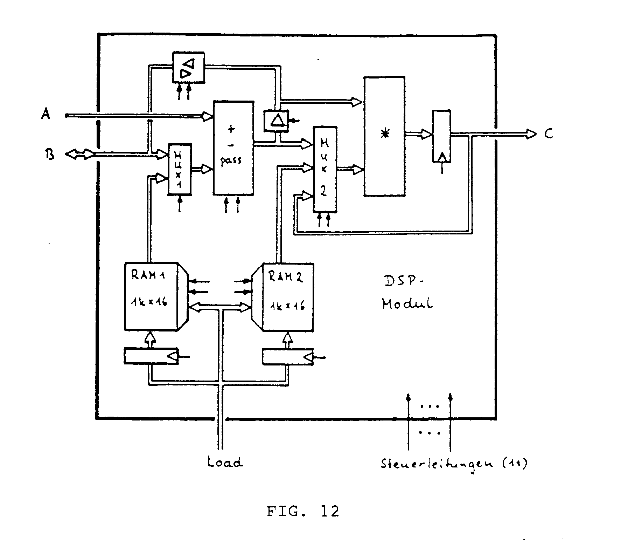

Fig. 12 zeigt das Blockdiagramm eines Hardwaremoduls, das eine Obermenge der obengenannten Grundfunktionen realisiert. Dieses Modul, im folgenden DSP-Modul genannt, enthält arithmetische Funktionseinheiten (Addierer, Multiplizierer) und ladbare Speicher zur Aufnahme von vordefinierten Parametern, sowie ein Pipelineregister. Der Datenfluß zwischen den Komponenten innerhalb des Moduls kann mit Hilfe von externen Steuersignalen in Grenzen variiert werden. Dazu sind entsprechende Multiplexer und Treiber in die Datenpfade geschaltet. Die folgende Tabelle 1 beschreibt die wählbaren Funktionen dieses Moduls.

Diese Eigenschaft des Moduls kann auf zwei Arten genutzt werden: einerseits lassen sich mit dem Modultyp verschiedene Funktionen realisieren durch (statische) Beschaltung der Steuerleitungen, abhängig von der jeweiligen Anwendung; andererseits kann die Funktion eines in einer Datenflußarchitektur eingebetteten Moduls dynamisch, d. h. in jedem Ablaufschritt, verändert werden.

Die Auswahl der Parameter erfolgt durch entsprechende externe Adressierung und kann ebenfalls in jedem Ablaufschritt verändert werden.

Tabelle 1: Funktion des DSP-Moduls

$C = (A \pm B) * para_2$

$C = (A \pm para_1) * para_2$ und $B = A \pm para_1$

$C = (A \pm B)^2$

$C = (A \pm para_1)^2$ und $B = (A \pm para_1)$

$C = A^2$

$C = A * B$

$C = A * para_2$

$C = para_1 * para_2$

$C = para_1{}^2$

$$C_t = C_{t-1} * (A \pm B)_t$$
$$C_t = C_{t-1} * (A \pm para_1)_t \text{ und } B_t = (A \pm para_1)_t$$
$$C_t = C_{t-1} * A_t$$
$$C_t = C_{t-1} * B_t$$
$$C_t = C_{t-1} * para_1$$

Die Integration eines solchen Moduls ist mit derzeit verfügbarer Technologie (1,5 $\mu$ CMOS) möglich, wobei folgende charakteristische Daten zu erwarten sind:
- Gehäuse: 84 pin LCC oder PGA
- Chipfläche: <300 x 300 mil
- maximale Laufzeit: <150 ns
(für C = (A $\pm$ para$_1$)*para$_2$)

Aufgrund dieser Eigenschaften lassen sich mit relativ wenigen Modulen dieser Art Datenflußarchitekturen zur Implementierung komplexer Algorithmen aufbauen. Dabei sind Datenraten von >6 MHz mit derzeitiger Technologie erreichbar, wobei die Abhängigkeit der Algorithmen von Echtzeitparametern berücksichtigt ist.

Das Modul wurde zwar in erster Linie zur Implementierung der hier beschriebenen Algorithmen entworfen, aufgrund seiner Flexibilität können damit aber auch andere Anwendungen mit ähnlichen Anforderungen abgedeckt werden.

Zur Implementierung werden 28 Module dieses Typs eingesetzt. Zusätzliche Bausteine sind erforderlich für das Pipelining der Parameteradressen sowie zur Speicherung und Addition der Korrekturterme. Der Gesamtaufwand beträgt somit 50 Bausteine, gegenüber mindestens 184 Bausteinen bei der Realisierung mit Standard-Komponenten. Rechnet man pro Pipelinestufe eine Verzögerungszeit von ca. 150 ns, so läßt sich eine Datenrate von >6 MHz realisieren. Bei dieser Implementierung ist die Funktion jedes Moduls statisch definiert.

Der erforderliche Aufwand läßt sich nochmals drastisch senken, wenn man zum einen die Datenrate auf die Mindestforderung reduziert (>3 MHz) und zum anderen die Funktion einiger Module dynamisch ändert. Dann können Symmetrien im Datenflußgraph genutzt werden, indem Rechenoperationen, statt in zwei Modulen gleichzeitig, nacheinander in einem Modul ausgeführt werden.

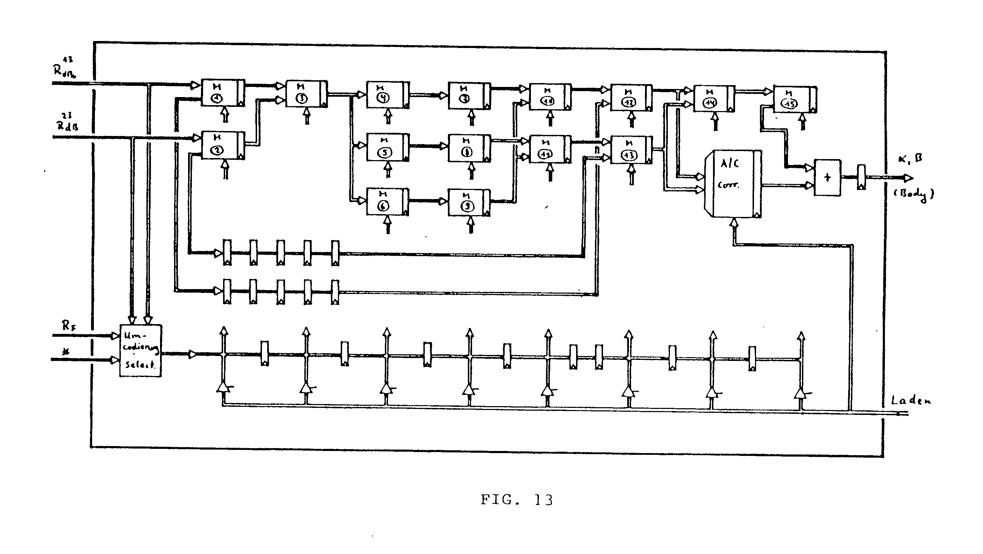

Fig. 13 zeigt das zugehörige Blockdiagramm.

In dieser Realisierung sind nur noch 15 Module erforderlich, der Gesamtaufwand reduziert sich auf 33 Bausteine bei einem Datendurchsatz von >3,3 MHz.

Nachfolgend werden Implementierungsdetails zur sogenannten Minimallösung gemäß Fig. 13 betrachtet.

Mit Ausnahme der Module 7, 8, 9 sind die Funktionen aller Module statisch festgelegt. Bei den Modulen 7, 8, 9 wechselt die Funktion mit jedem Ablaufschritt, jedoch nur zwischen zwei Konfigurationen. Zur Ansteuerung der Auswahlleitungen genügt daher ein einfaches "Toggle"-Flip-Flop (für alle Leitungen und alle Module) mit komplementären Ausgängen.

Vor dem Start der eigentlichen Verarbeitung müssen alle Parameter in die Parameterspeicher der Module geladen werden. Dies kann unter Kontrolle eines universellen Mikrorechners geschehen, der die Ladeschnittstelle bedient und Speicher auswählt und adressiert.

Während der Verarbeitung erfolgt die Adressierung der Parameter über eine Adreß-Pipeline, abhängig von der Auswahl der Antennen und des Frequenzbereichs. In einigen Modulen sind zwei Parametersätze gespeichert, die mit jedem Ablaufschritt abwechselnd selektiert werden (z. B. Modul 1: Wechsel zwischen $K_1$, $L_1$ und $K_1$, $L_4$). Auch hier genügt zur Ansteuerung der Auswahlleitungen ein einfaches "Toggle"-Flip-Flop.

Im allgemeinen Anwendungsfall, wenn mehr als zwei Zustände im Ablauf unterschieden werden sollen, kann die Auswahl der Funktionen und der Parameter von einem mikroprogrammierten Steuerwertgeber geleistet werden.

## Baugruppe 2: Transformationen

Die weiteren Berechnungen zur Koordinatentransformation (vgl. Fig. 7) in das erdfeste, nordbezogene Navigationssystem können mit vertretbarem Aufwand mit Hilfe von herkömmlichen Komponenten und digitalen Signalprozessoren reali siert werden.

Aufgrund der Anforderungen an die Verarbeitungsgeschwindigkeit können die Sinus- und Cosinusfunktionen nicht mit einer Reihenentwicklung berechnet werden, sondern werden sinnvollerweise in Tabellen gespeichert, aus denen sie unmittelbar gelesen werden können.

Bausteine dieser Art sind als sogenannte Sinus- und Cosinus-Generatoren verfügbar (z. B. AMD 29526. ..., 29529).

Die Bausteine akzeptieren Eingangswerte im Bereich $0 \leq \alpha \leq \pi$ mit der Auflösung $\pi$ 2048. d. h. 11 Bit Eingabedaten. Die Ausgabe erfolgt in Form von Brüchen im 2-er Komplement (Komma unmittelbar rechts vom Vorzeichen). Berechnet werden SIN(a) und COS(a), wobei die Ausgabe Werte im Bereich $-1 \leq f(a) \leq +1$ annehmen kann. Jeder Baustein erzeugt 8 Bit Ausgabedaten. Durch die Kaskadierung von je zwei Bausteinen können 16 Bit Genauigkeit erreicht werden.

Zur Gewinnung des Richtungsvektors müssen die Sinus- und Cosinuswerte entsprechend multipliziert werden.

$$B = \begin{vmatrix} b_1 \\ b_2 \\ b_3 \end{vmatrix} = \begin{vmatrix} COS\ A * COS\ B \\ SIN\ A * COS\ B \\ SIN\ B \end{vmatrix}$$

Zur Transformation des Richtungsvektors in das Navigations-Koordinatensystem wird eine Matrixmultiplikation $N = C^*B$ ausgeführt mit

$$N = \begin{vmatrix} x \\ y \\ z \end{vmatrix} \quad C = \begin{vmatrix} C11 & C12 & C13 \\ C21 & C22 & C23 \\ C31 & C32 & C33 \end{vmatrix} \quad B = \begin{vmatrix} B1 \\ B2 \\ B3 \end{vmatrix}$$

Die Werte des Richtungsvektors B werden in Echtzeit mit der geforderten Datenrate (>3 MHz) aus den Antennensignalen berechnet. Die C-Matrix bestimmt die Fahrzeug-(Flugzeug)lage und wird mit einer sehr viel geringeren Datenrate aufgedatet (ca. 10 Hz).

Die Matrixmultiplikation kann mit herkömmlichen Multiplizierer Akkumulatorbausteinen oder den erfindungsgemäßen Hardware-Modulen implementiert wereden.

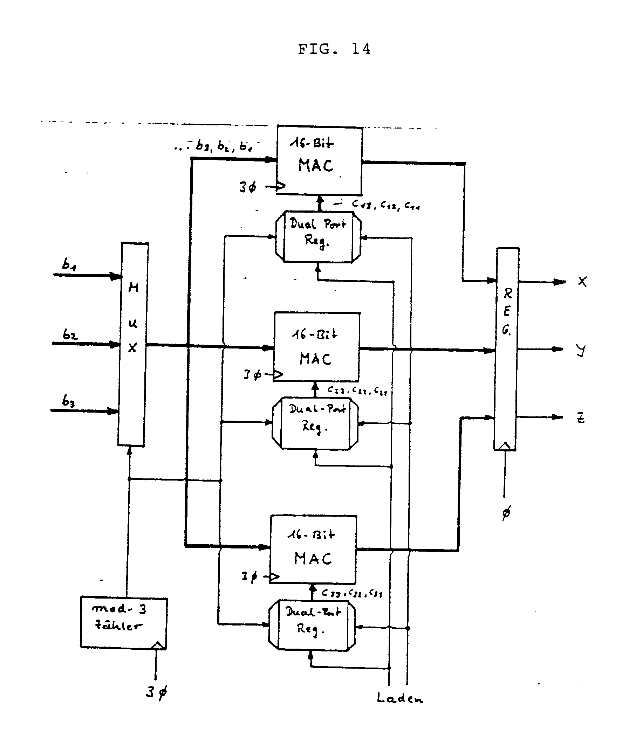

Fig. 14 zeigt das Blockdiagramm einer möglichen Realisierung mit drei Multiplizierer/Akkumulatorbausteinen (MACs). In dieser Anordnung müssen die Multiplikationen und Additionen mit dem Dreifachen der geforderten Mindestdatenrate ausgeführt werden, was mit heute verfügbaren MAC-Bausteinen realisierbar ist (z. B. WEITEK WTL 2010 B mit 45 ns). Die Koeffizienten $C_{ij}$ der Matrix C werden in Dual-Port-Registerfiles gespeichert und können somit jederzeit aufgedated werden. ohne den Datenfluß merklich zu stören.

Aus dem transformierten Richtungsvektor werden die Winkel im Navigationssystem wie folgt berechnet:
$A_N$ = ARCTAN (Y / X)
$B_N$ = ARCTAN (Z/SQRT $(X^2 + Y^2)$).

Bisher war die Realisierung der Funktionen ARCTAN, SQRT und der Division unter den gegebenen Randbedingungen nur mit extrem hohem Aufwand möglich, indem die Funktionswerte in riesigen Tabellen abgelegt wurden.

Inzwischen kann diese Aufgabe mit einem bekannten Baustein bewältigt werden. Dieser sogenannte Pythagoras-Prozessor (z. B. Typ PDSP 16330 der Firma PLESSEY) berechnet aus zwei 16-Bit Eingabewerten X und Y gleichzeitig die Funktionen SQRT $(X^2 + Y^2)$ und ARCTAN (X.Y) mit 16 bzw. 12 Bit Genauigkeit.

Die Berechnung erfolgt intern mit 24 Pipelinestufen bei einer Datenrate von maximal 10 MHz.

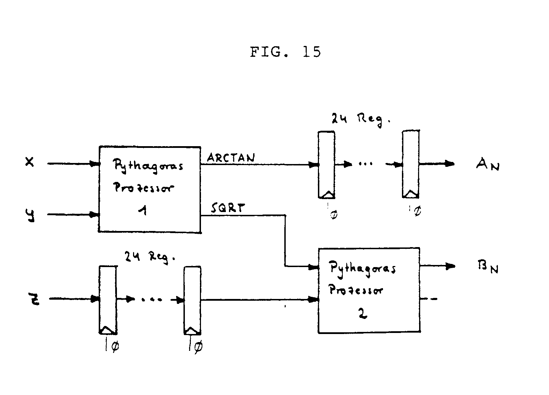

Fig. 15 zeigt eine Blockstruktur zur erfindungsgemäßen Lösung dieser Aufgabe in der konkreten Anwendung. Zur Berechnung von $B_N$ wird ein Teilergebnis benötigt, das erst 24 Takte später am Ausgang des ersten Prozessors zur Verfügung steht. Der zugehörige Eingabewert Z muß entsprechend verzögert. zusammen mit dem ersten Teilergebnis, auf den Eingang des zweiten Prozessors gegeben werden. In gleicher Weise muß A< $A_N$ >N verzögert werden, wenn beide Ergebnisse $A_N$ und $B_N$ am Ausgang der Anordnung gleichzeitig bereitgestellt werden sollen.

Die erforderlilchen Berechnungen für diese Anwendung können auch von einem einzigen Pythagoras-Prozessor ausgeführt werden, vorausgesetzt, dessen Datenrate ist mindestens doppelt so groß wie die geforderte Datenrate. Die Funktionen können dann im Zeitmultiplexverfahren bestimmt werden. wobei auch hier die Zeitbeziehungen genau beachtet werden müssen.

Kapitel 4: Rechnersimulation und günstigste Antennenkonfigurationen

Der der Erfindung zugrundeliegende Algorithmus zur Bestimmung der Richtung eines Senders aus den Empfangssignalen dreier im Raum angeordneter Antennen wurde im Kapitel 2 dargestellt.

Das Simulationsprogramm basiert auf diesem Algorithmus und bietet weiterhin verschiedene Möglichkeiten zur Analyse der Ergebnisse. Ziel der Simulation ist es, die praktische Nutzung des Algorithmus zu überprüfen und sein Genauigkeitspo tential zu untersuchen. Ansatzpunkte sind hierbei zum einen die Leistung des Näherungsverfahrens, zum anderen die Geometrie der Antennenanordnung (Konfiguration) und die Antennencharakteristik.

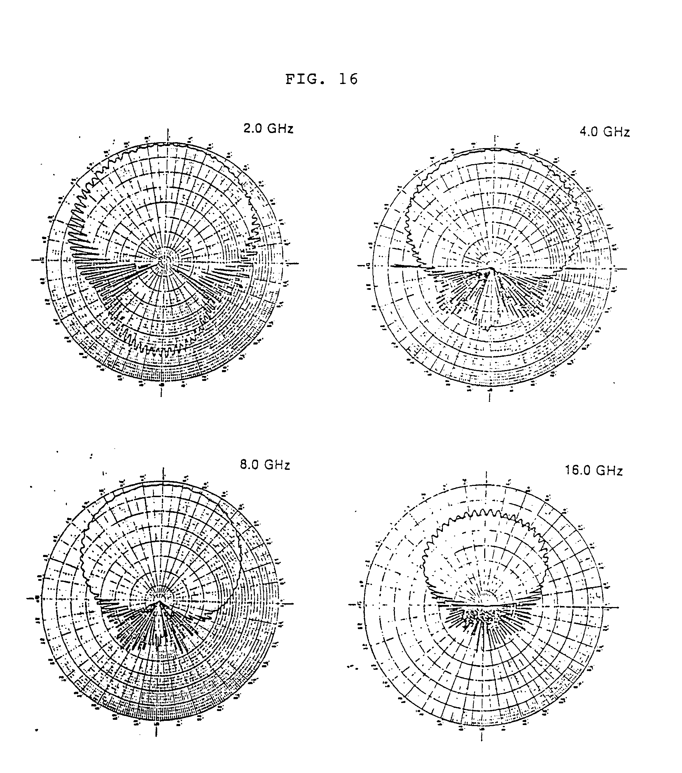

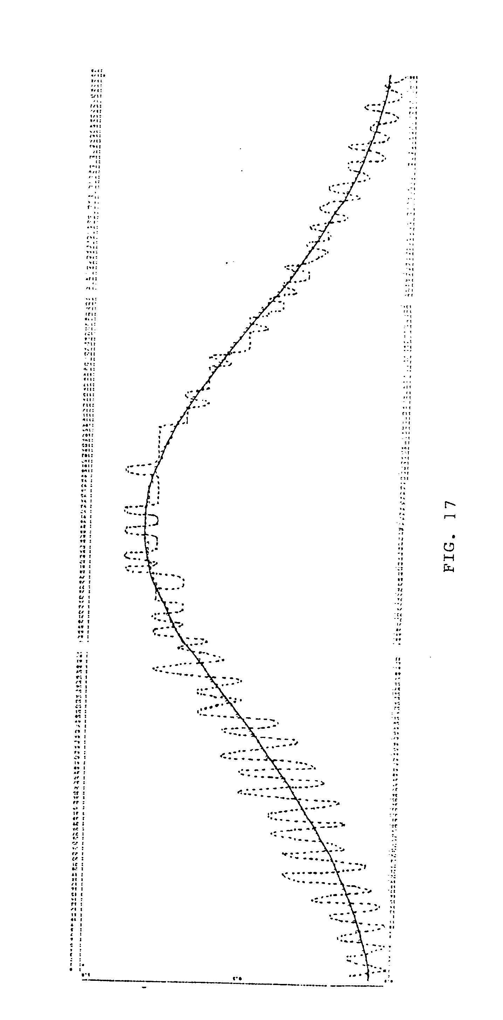

Die Empfangscharakteristik der verwendeten Antennen hat einen entscheidenden Einfluß auf die Genauigkeit der Richtungsbestimmung. Deswegen wurden für die Simulation der Empfangssignale die Diagramme einer typischen Antenne für vier verschiedene Frequenzen gemäß Fig. 16 digitalisiert. Dabei wurde die Amplitude im Bereich zwischen $-90°$ und $+90°$ mit einer Schrittweite von $1°$ auf 0,5 dB genau festgelegt. Mit Hilfe eines FORTRAN-Programms wurden die so digitalisierten Werte graphisch dargestellt und durch die Gauß'sche Glockenkurve angenähert, um den 3-dB-Bereich der jeweiligen Antenne zu bestimmten. Für den 2 GHz-Frequenzbereich ist dies in der Fig. 17 dargestellt, die abgeleiteten Antennenparameter verdeutlicht die nachstehende Tabelle 2.

Tabelle 2

| Frequenz | 3-dB-Bereich |
|---|---|
| 2 GHz | $50,5° - 129,5° \cong 79°$ |
| 4 GHz | $52,5° - 130,5° \cong 78°$ |
| 8 GHz | $55,5° - 124,5° \cong 69°$ |
| 16 GHz | $52,0° - 132,0° \cong 80°$ |

Das Simulationsprogramm erwartet die digitalisierten Antennencharakteristiken auf einem separaten Eingabefile.

Die Software des Simulationsprogramms besteht aus drei Blöcken. Nach der Eingabe der simulationsrelevanten Daten und der Steuerparameter wird der Algorithmusblock abgearbeitet. Den Abschluß bilden die Analyse sowie die numerische und graphische Ausgabe der Ergebnisse.

Im folgenden wird der Programmablauf kurz erläutert.

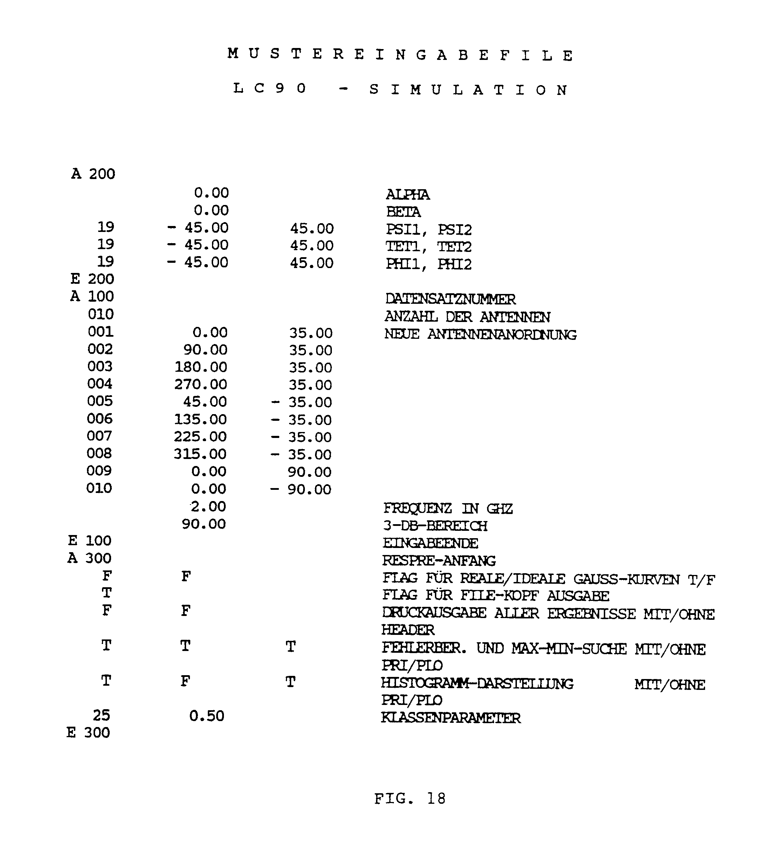

Nach Eingabe und Programmstart werden einige Eingaberoutinen durchlaufen, die auf das Eingabefile (Fig. 18) zugreifen. Es werden nacheinander die Anzahl der Antennen und die Winkel für die Antennenanordnung, die Frequenz und der 3-dB-Bereich der Antennen, die Sollwerte für Azimut- und Elevationswinkel der Strahlquelle, die Intervalle für Pitch, Roll und Heading des Flugzeugs eingegeben. Danach werden die Steuerparameter für den Programmablauf und die Ausgabe gesetzt.

Zum Aufbau der Berechnungsalgorithmen werden als erstes die Eingangssignale generiert, wahlweise aus den digitalisierten Antennendiagrammen oder aus einer idealen Gauß-Kurve. Dann wird der Lösungsalgorithmus durchlaufen, und zwar unter Variation von Pitch, Poll und Heading so lange, bis die vorgegebenen Intervalle durchlaufen sind. Nach jedem Lauf werden die Fehler in Azimut- und Elevationsbestimmung sowie die Flugzeuglagewinkel und die benutzten Antennen auf ein internes File geschrieben.

Mit den nachfolgenden Analyseroutinen werden drei Aussagen getroffen:

a) Globales Gütekriterium

Aus allen Ergebnissen werden der Mittelwert und der Fehler (RMS) bestimmt, womit man ein Maß für die erreichbare Genauigkeit hat.

b) Extremwerte

Neben der pauschalen Genauigkeitsaussage interessiert natürlich auch das Verhalten in Extremsiuationen. Hierzu wird eine Maximum-Minimum-Suche durchgeführt, die neben den extremen Fehlern (positiv und negativ) auch die dazugehörigen Flugzeuglagewinkel liefert.

c) Fehlerverteilung

Eine Histogrammdarstellung der Fehler wird bestimmt, um eine Verteilungsaussage treffen zu können und um das Überschreiten bestimmter Fehlergrenzen (z. B. $10°$) zu bestimmen.

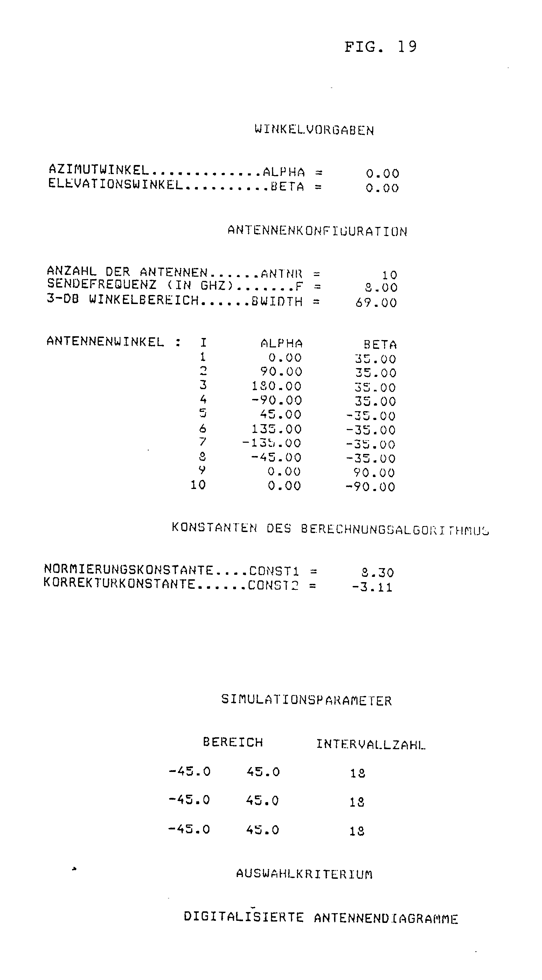

Hinsichtlich der Ausgabe der Winkelwerte sind verschiedene Druck- und Plotausgaben möglich, deren Steuerung über das Eingabefile erfolgt. Die gewählten Eingabedaten können zur Kontrolle ausgegeben werden (siehe Fig. 19).

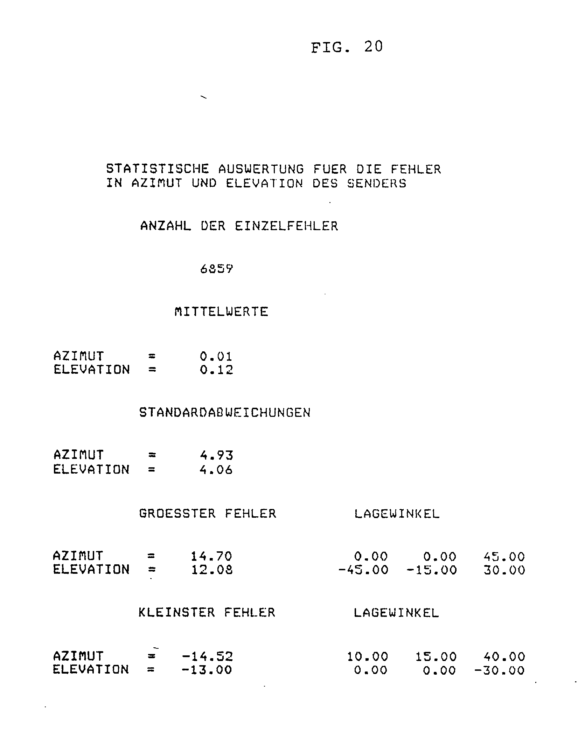

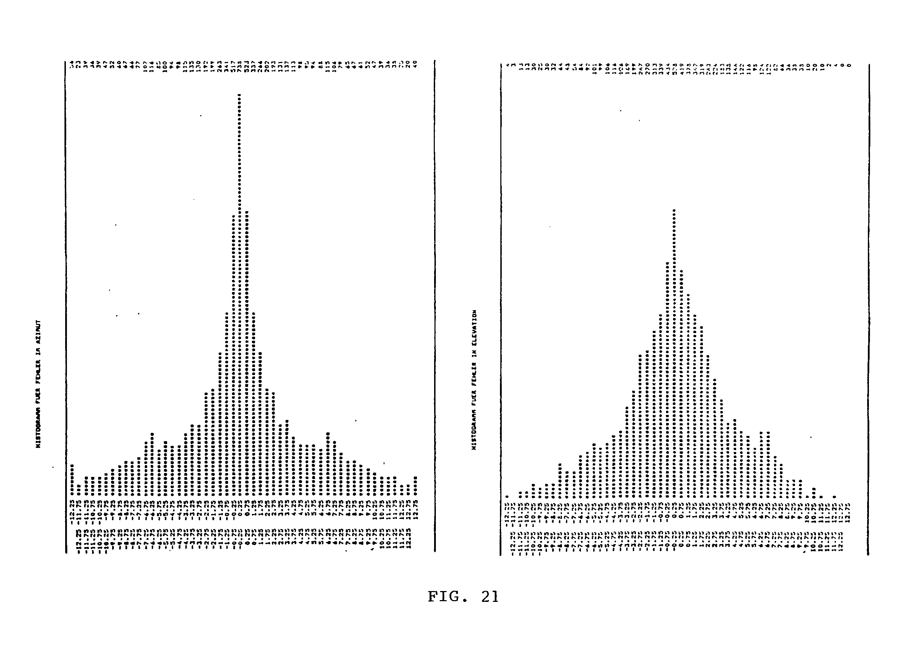

Die mittels der Analyseroutine berechneten Ergebnisse können ausgegeben werden (siehe Fig. 20 und 21).

Weiterhin ist es möglich, alle Daten des internen Files direkt auszugeben. Dieses kann für Einzeluntersuchungen nützlich sein.

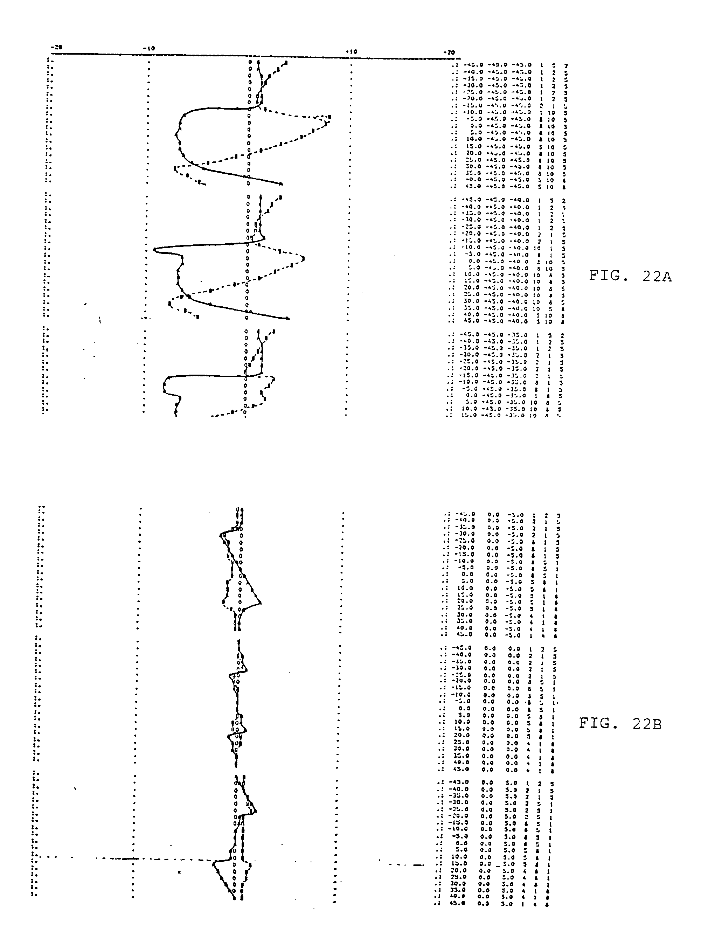

Eine Plotausgabe aller Fehler ist möglich, um das Fehlerverhalten während bestimmter Flugmanöver untersuchen zu können. Sie enthält auch die Flugzeuglagewinkel und die benutzten Antennen (siehe Fig. 22A/B).

Um den Ablauf der Simulation transparent zu halten, wurde eine Vorgehensweise in zwei Schritten gewählt.

Am Anfang stand die Untersuchung des Algorithmus, also der Einflüsse von Näherungsverfahren und Antennenanordnung. Anschließend wurde das Gesamtsystem untersucht, was den zusätzlichen Einfluß der realen Antennencharakteristiken verdeutlicht. Gesteuert wird der gesamte Simulationslauf über das Eingabefile (Fig. 18). Vorab sind noch einige Bereichsfestlegungen für die Variation von Pitch, Roll und Heading des Flugzeugs nötig. "Kleine Bereich" bedeutet hier ± 10° für alle Lagewinkel, "Mittlerer Bereich" ± 30° und "Großer Bereich" ± 45°. Hiervon abweichende Simulationen werden je weils extra beschrieben. Die Bestimmungsgrößen, also Azimut und Elevation der Strahlungsquelle, sind mit $\alpha$ und $\beta$ bezeichnet. Die Ergebnisse der Simulation werden immer getrennt für $\alpha$ und $\beta$ ausgegeben.

Durch Simulation der Empfangssignale über eine ideale Gauß-Kurve treten lediglich Algorithmusfehler auf, die durch eine sinnvolle Wahl der Antennenkonfiguration positiv beeinflußt werden können. Eine Zusammenstellung der Ergebnisse dieser Untersuchungen befindet sich in der Tabelle der Fig. 18.

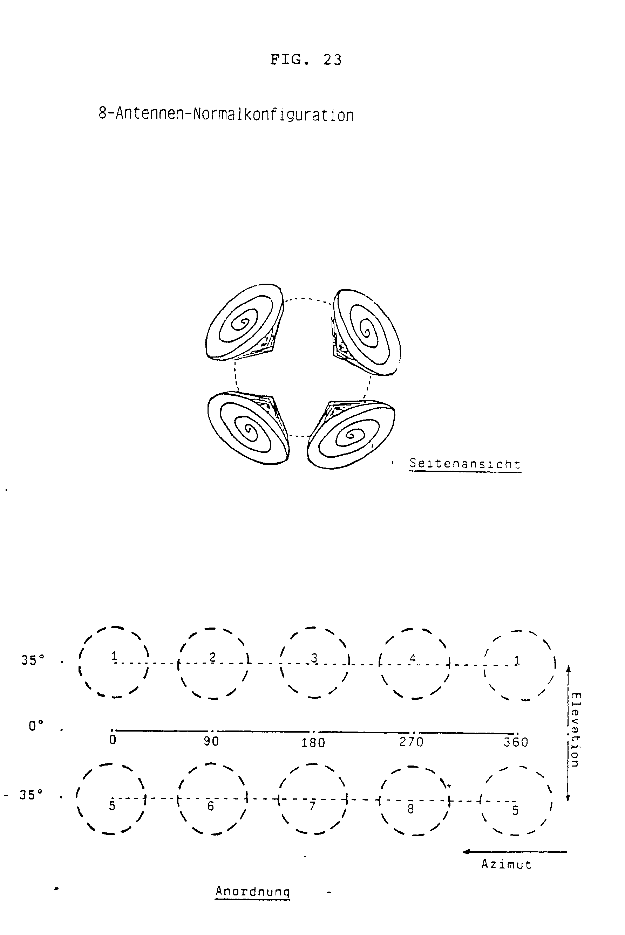

Zur Ermittlung einer optimalen Antennenkonfiguration wurde als Ausgangspunkt eine symmetrische 8-Antennen-Normalkonfiguration (Fig. 23) gewählt, mit der drei Simulationen durchgeführt wurden.

Bei Variation von Pitch, Roll und Heading im Kleinen Bereich ergaben sich Fehler (RMS) für $\alpha$ und $\beta$ von 3,9° bzw. 0,5°, die im Mittleren Bereich auf 5,6° bzw. 2.6° ansteigen. Bei der Simulation im Großen Bereich trat eine Singularität auf, die dadurch bedingt ist, daß drei Antennen mit gleicher Elevation im Body-System (z. B. 35° für 1, 2, 3) benutzt wurden. Also ist diese Konfiguration in Extrembereichen nicht günstig und die erreichbare Genauigkeit im Horizontbereich ist auch nicht völlig zufriedenstellend.

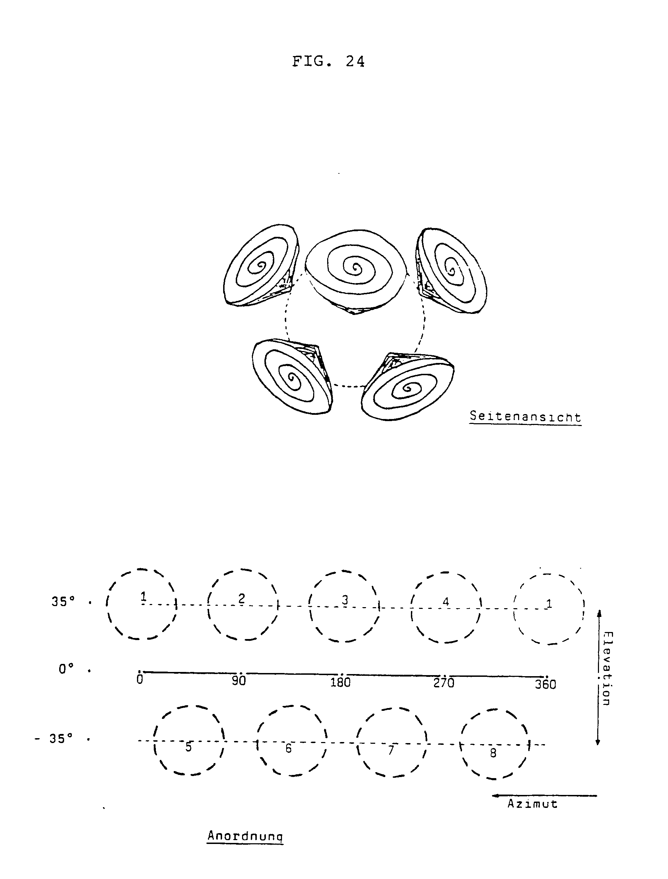

Mit der versetzten 8-Antennen-Konfiguration (siehe Fig. 24) wurde eine Genauigkeitssteigerung angestrebt, die im Kleinen Bereich mit 0,5° bzw. 1,0° RMS auch erreicht wurde. Im Horizontbereich liegen damit alle Fehler unter 2,2°, was als sehr gut bezeichnet werden kann. Allerdings tritt die Singularität hier schon im Mittleren Bereich auf. Ein Simulationslauf im mittleren Bereich für Roll und Heading bei Variation von Pitch im kleinen Bereich lieferte mit 2,2° bzw. 2,0° RMS gute Ergebnisse. Ohne eine Beseitigung der Singularitäten ist allerdings auch diese Konfiguration für eine Anwendung weniger geeignet.

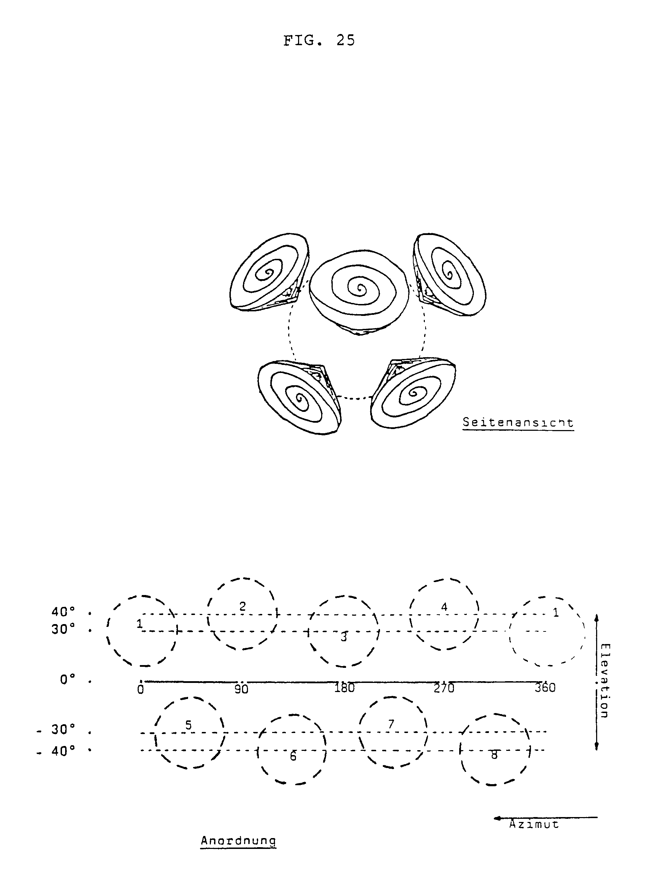

Eine doppelt versetzte 8-Antennen-Konfiguration nach Fig. 25 beseitigt die Singularitäten und liefert im kleinen Bereich ebenso sehr gute Ergebnisse. Aufgrund großer Fehler im mittleren und großen Bereich ist sie aber trotz beseitigter Singularitäten nicht besonders geeignet.

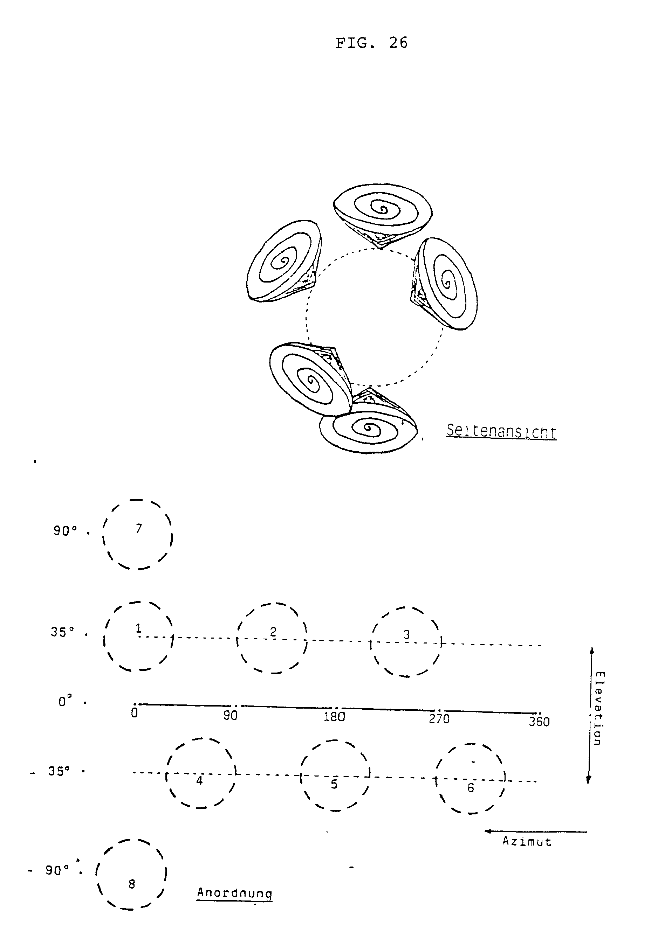

Durch gleichmäßigere Verteilung der Antennen in einer 8-Antennen-Konfiguration mit zwei "Spitzenantennen" (Fig. 26) wird auch für extreme Flugzeuglagen die Genauigkeit gesteigert, was aber die Genauigkeit im Horizontbereich etwas beeinträchtigt. Singularitäten treten bei dieser Konfiguration nicht mehr auf.

Im mittleren Bereich ergeben sich Fehler von 4,5° bzw. 5,8°; im großen Bereich von 6.2° bzw. 6.6°, aber Maximalwerte von größer 20°. Die Genauigkeiten sind zwar vergleichsweise gut, aber noch nicht vollständig zufriedenstellend.

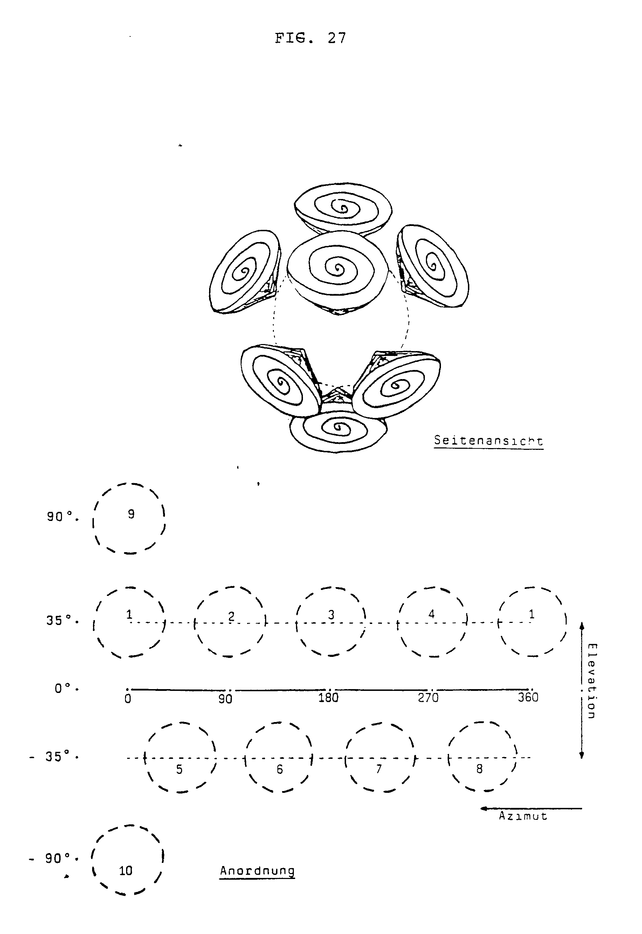

Durch Hinzunahme von zwei Antennen kann mit einer 10-Antennen-Konfiguration (Fig. 27) die gute Genauigkeit im Horizontbereich, wie vorstehend mit Bezug auf die "versetzte 8-Antennen-Konfiguration" erwähnt, erhalten werden, während durch die zwei "Spitzenantennen" die Singularitäten ausgeschaltet und die Genauigkeit in Extremsituationen verbessert werden.

Im kleinen Bereich ergeben sich Fehler von 0,5° bzw. 1,0°, im mittleren Bereich von 4.0° bzw. 3,4° und im großen Bereich von 4,9° bzw. 4,0°. Das absolute Maximum bleibt hier kleiner als 15° und die Überschreitungen der 10° Grenze von 6 bzw. 2 % bleiben gering. Die Ergebnisse dieser Simulation sind in den Fig. 18 bis 22B dargestellt.

Beim Betrachten der Histrogramme (Fig. 21) werden die positiven Ergebnisse bestätigt. Die Fehler sind annähernd normalverteilt, so daß die berechneten Fehlerwerte angenommen werden können.

Die Analyse der Fehlerplots (Fig. 22A und 22B) liefert folgende Ergebnisse: In Extremsituationen ist der Verlauf unregelmäßig; es treten große Sprünge beim Wechsel der Antennen auf und die Fehler erreichen Werte um 10°. Im Horizontbereich ist der Verlauf dagegen glatt, die Sprünge sind zwar erkennbar, aber klein, und die Fehler bleiben unter 2°.

Zusätzlich wurden für diese Konfiguration noch einige andere Simulationen ausgeführt, die aber nur kurz zusammenfassend erwähnt werden sollen. Führt man die Pitch-, Roll- und Heading-Bewegung getrennt durch, so zeigen sich bei Roll und Heading sehr kleine Fehler, während beim Pitch größere Fehler auftreten. Verändert man den Sollwert für die Elevation der Strahlungsquelle, so zeigen sich keine signifikanten Änderungen in den Fehlern.

Zusammenfassend zeigen die durchgeführten Simulationen deutlich den Einfluß der Konfiguration auf die erzielbare Genauigkeit, wobei die erfindungsgemäßen Antennenanordnungen aus Vorüberlegungen resultierten, ohne daß eine strenge wissenschaftliche Fehlerminimierung erfolgte. Als wesentlich wird angesehen, daß mit einer erfindungsgemäßen Antennenanordnung die im Algorithmus möglichen Singularitäten durch eine entsprechende Konfiguration ausgeschaltet werden. Die aufgezeigten Abhängigkeiten der Fehler von Pitch, Roll und Heading des Flugzeugs können dadurch erklärt werden, daß keine gleichmäßige Abdeckung für alle Richtungen gegeben ist. Dieses wurde gewählt, um im Horizontbereich eine besonders hohe Genauigkeit zu erreichen. Abschließend kann gesagt werden, daß der Algorithmus bei Benutzen der erfindungsgemäßen 10-Antennen-Konfiguration (Fig. 27) zufriedenstellende Ergebnisse in allen Flugzeuglagen liefert.

Für eine weitere Untersuchung des Gesamtsystems mittels Simulationen wurde die erfindungsgemäße 10-Antennen-Konfiguration als fest vorgegeben angenommen und die Signalgenerierung erfolgte nun aus den digitalisierten Antennendiagrammen (siehe Fig. 16). Simuliert wurde mit vier verschiedenen Frequenzen der Eingangssignale. Die Ergebnisse sind in Fig. 19 zusammengestellt.

Aufgrund der großen Abweichungen der Antennencharakteristiken von den idealen Gauß-Kurven können wieder Singularitäten auftreten, so daß zusätzliche Abfragen eingeführt werden, um die Singularitäten zu vermeiden.

Im 2-GHz-Frequenzbereich geht neben der digitalisierten Charakteristik auch der 3-dB-Bereich (79° bei 2 GHz) in den Algorithmus ein. Aufgrund des oszillierenden Verlaufs im Antennendiagramm (siehe Fig. 16) ergeben sich große Fehler. Für den kleinen Bereich bedeutet das 9,7° bzw. 9,8°, für den großen Bereich 11,4° bzw. 12,2° RMS. Die Maximalwerte sind aber größer als 50°.

Im 4-GHz-Frequenzbereich wurde ein 3-dB-Bereich von 78° benutzt. Die Ergebnisse sind besser als für den 2 GHz-Bereich, nämlich im großen Bereich 8,7° bzw. 12,0° RMS, aber die Maximalwerte liegen auch hier unbefriedigend hoch.

Schon die Betrachtung der Charakteristik (Fig. 16) für den 8-GHz-Frequenzbereich (3-dB Bereich von 69°) läßt auf eine höhere Genauigkeit schließen. Die Simulationen bestätigen diese Vermutung, denn für den kleinen Bereich ergaben sich Fehler (RMS) von 2,4° bzw. 2,2°, wobei keine Einzelfehler über 10° lagen. Ähnlich gut sieht es beim großen Bereich aus, wo RMS-Werte von 5,2° bzw. 5,9° erreicht wurden. Die Maximalwerte liegen hier bei ungefähr 20° und die Überschreitungen der 10°-Grenze betragen 8 % bzw. 9 %.

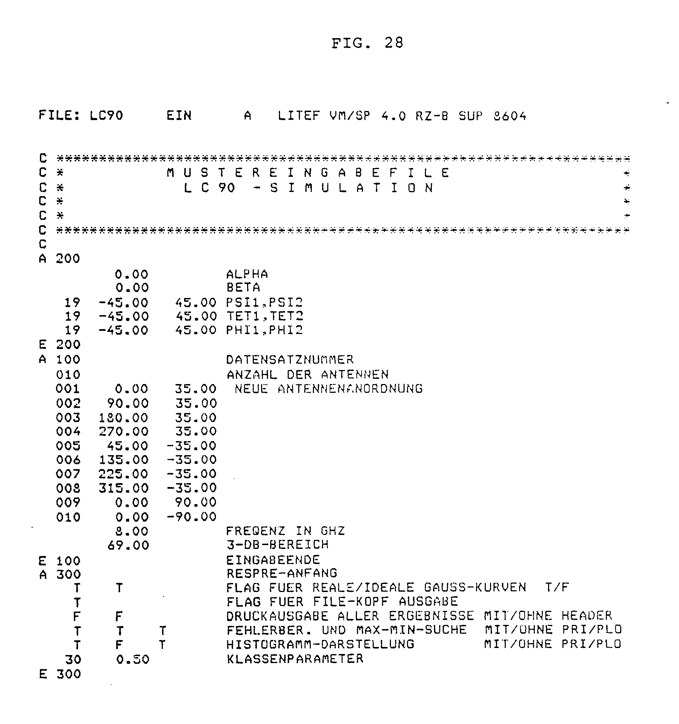

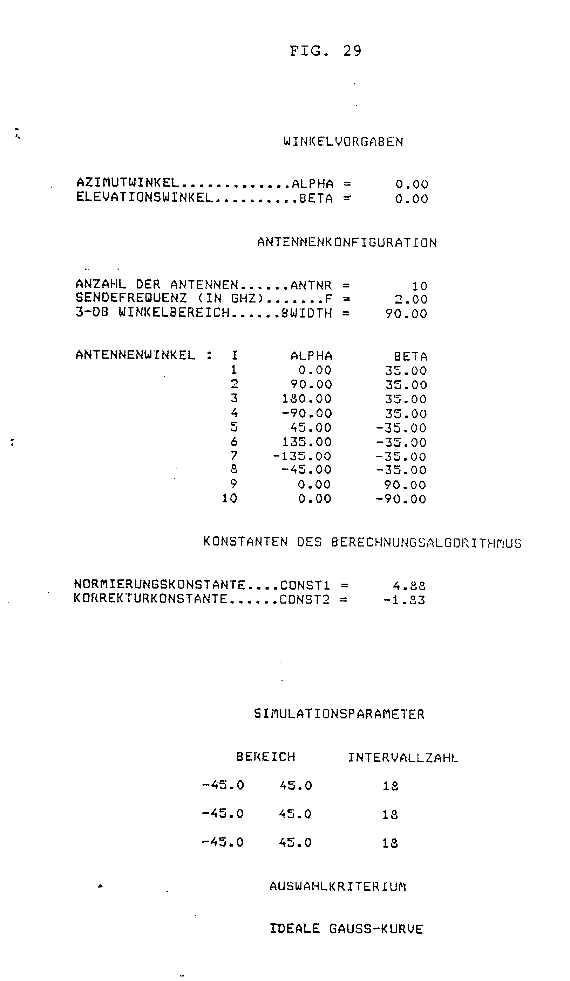

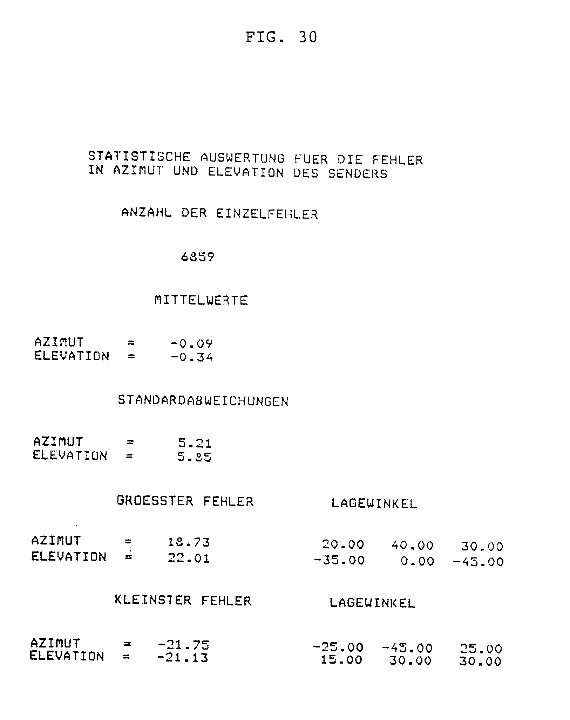

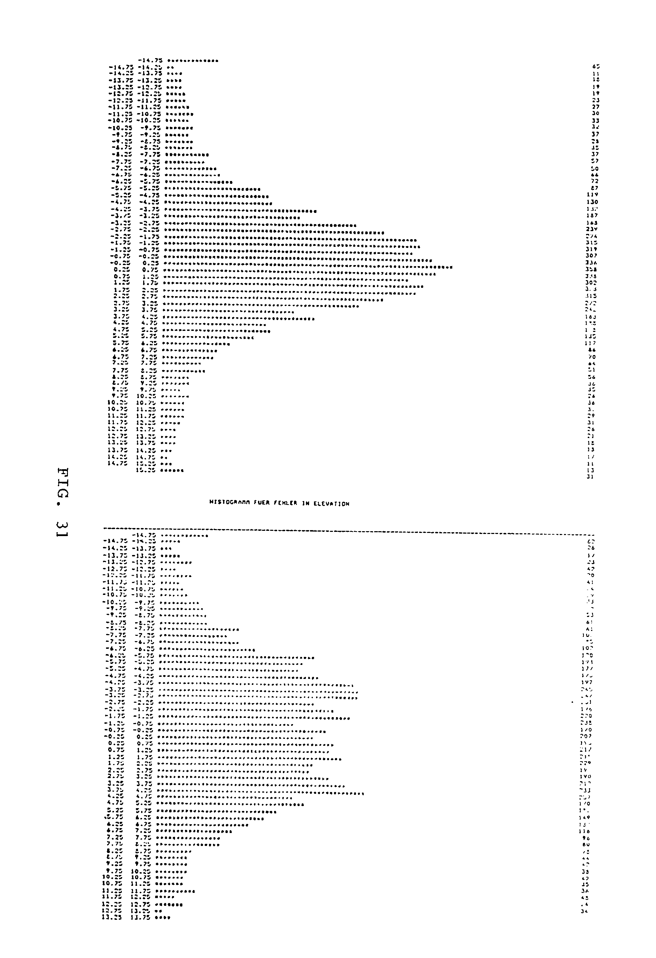

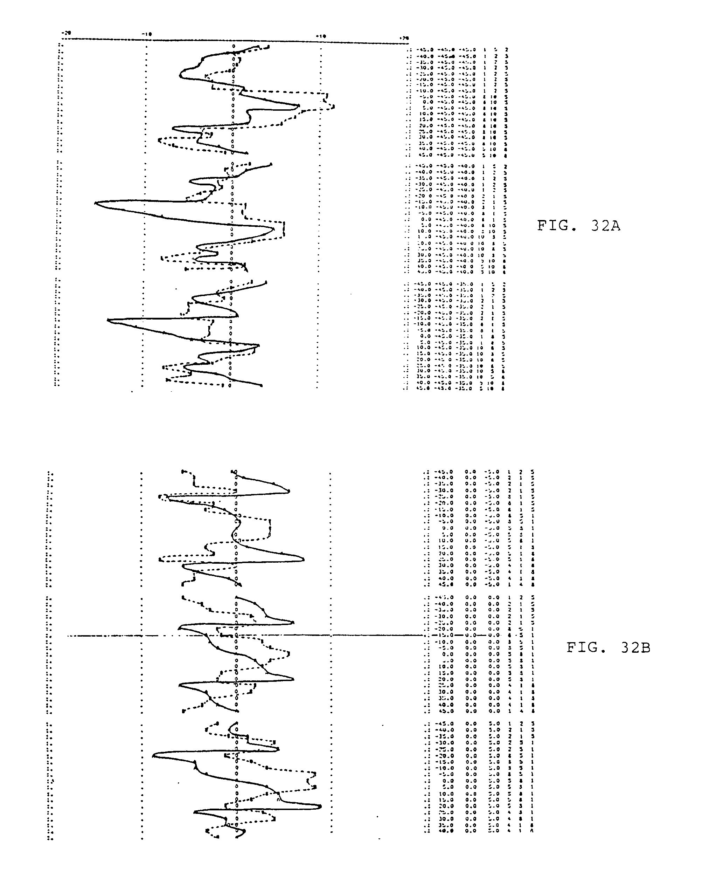

Die Ergebnisse dieser Simulationen sind in den Tabellen und Kurven der Fig. 28 bis 31, 20, 21, 22A, 22B, 32A, 32B dargestellt. Die "Histogramme" (Fig. 21 und 31) zeigen neben den größeren Fehlern besonders das Fehlen eines ausgeprägten Maximums bei Null (vgl. Fig. 21). Die geographische Darstellung der Fehler (Fig. 32A, 32B) zeigt in Extremsituationen einen wesentlich unruhigeren Verlauf als die reinen Algorithmusfehler (Fig. 22A). Im Horizontbereich fällt neben diesen Schwankungen auch der vergrößerte Betrag der Fehler auf (vgl. Fig. 22B).

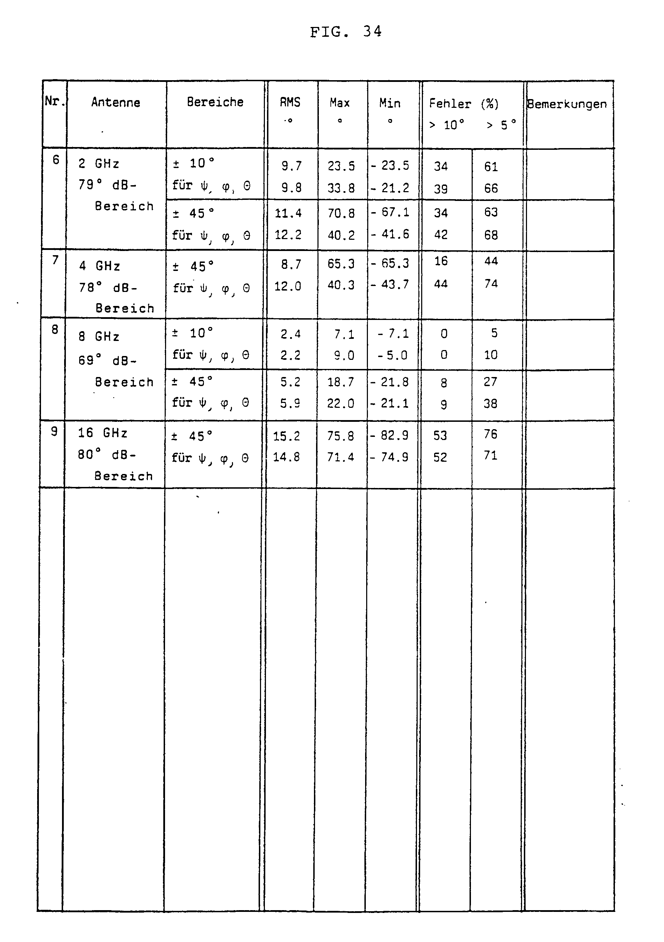

Die Tabelle der Fig. 34 stellt die Simulationsergebnisse für vier untersuchte Frequenzbereiche (einschließlich des 16 GHz-Bereichs) zusammen.

Es hat sich durch die Simulationen gezeigt, daß bei Verwendung der beschriebenen Antenne der Hauptteil möglicher Fehler aus Algorithmus und Konfiguration resultiert, so daß hier die Ansatzpunkte für Verbesserungen und weitere Studien gesehen werden müssen. Zum einen kann eine weitere Optimierung der Antennen-Konfiguration bzw. ein Hinzunehmen weiterer Antennen die Fehler weiter reduzieren. Zum anderen ist auch der Algorithmus selbst noch verbesserungsfähig, indem ein besseres Näherungsverfahren eingeführt wird oder durch Nutzen von drei Verhältnissen (redundante Informationen). Voraussetzung dabei ist aber, daß die Leistungsfähigkeit des Signalprozessors noch weiter gesteigert werden kann, um die erweiterten Algorithmen mit der geforderten Durchsatzleistung berechnen zu können.

## Ansprüche

1. Verfahren zur Bestimmung des Azimut- und Elevationswinkels der Einfallsrichtung von Hochfrequenzpulsen mittels Monopuls-Amplitudenauswertung, bei dem
- Signale einer Mehrzahl von an einem Fahrzeug, insbesondere Flugzeug, montierten Antennen in räumlicher Anordnung empfangen werden, die drei stärksten Empfangssignale logarithmischen Verstärkern zugeführt werden und danach paarweise Differenzverstärkern zur Bildung der logarithmischen Amplitudenverhältnissen ($R_{dB}$) zugeführt werden, die anschließend digitalisiert und zusammen mit der Positionsinformation über die betreffende Ursprungsantenne an einen Signalprozessor weitergeleitet werden, und

- in dem Signalprozessor aus den Verhältnissen der Amplituden und der vorgespeicherten Kenntnis der Anordnung der Spiralantennen die räumlichen Empfangswinkel ($\alpha$, $\beta$) im Koordinatensystem des Fahrzeugs bestimmt werden.

2. Verfahren nach Anspruch 1, **dadurch gekennzeichnet**, daß Antennen mit symmetrischer Empfangscharakteristik verwendet werden, deren Winkel-Amplituden-Diagramm einer Gauß'schen Verteilungskurve entspricht.

3. Verfahren nach Anspruch 2, **dadurch gekennzeichnet**, daß Spiralantennen verwendet werden.

4. Verfahren nach Anspruch 1, **dadurch gekennzeichnet**, daß die räumlichen Empfangswinkel im Signalprozessor von dem auf das Fahrzeug bezogenen Koordinatensystem in ein lageunabhängiges Navigationssystems transformiert werden.

5. Verfahren nach Anspruch 1, **dadurch gekennzeichnet**, daß die Bestimmung der räumlichen Empfangswinkel im Signalprozessor relativ zur Richtung derjenigen Antenne mit dem stärksten Empfangssignal erfolgt.

6. Verfahren nach Anspruch 1, **dadurch gekennzeichnet**, daß die frequenzabhängige Empfangscharakteristik jeder der Antennen in einem Digitalformat gespeichert und bei der Bestimmung der räumlichen Empfangswinkel mit Bezug auf die Frequenz des Empfangssignals in Form von Koordinatenwerten für die drei die stärksten Empfangssignale liefernden Antennen berücksichtigt werden.

7. Verfahren nach einem der vorstehenden Ansprüche, **dadurch gekennzeichnet**, daß eine räumliche Anordnung von acht Antennen verwendet wird.

8. Verfahren nach Anspruch 7, **dadurch gekennzeichnet**, daß die acht Antennen mit Bezug auf eine gedachte Kugel mit festgelegter Äquatorialebene und Nullmeridian wie folgt mit radial zum Kugelmittelpunkt ausgerichteten Antennenachsen angeordnet werden:

- drei Antennen werden, beginnend mit dem Nullmeridian, meridional gleichabständig auf einem Breitenkreis mit einer Elevation von $+35°$ fixiert,

- drei weitere Antennen werden, beginnend mit einem Meridian von $60°$, meridional gleichabständig, also mit einem Winkelabstand von $120°$, auf einem Breitenkreis mit einer Elevation von $-35°$ fixiert,

- eine Antenne wird im einen Pol und eine weitere Antenne wird im Gegenpol der gedachten Kugel montiert.

9. Verfahren nach einem der Ansprüche 1 bis 6, **dadurch gekennzeichnet**, daß eine räumliche Anordnung von zehn Antennen verwendet wird.

10. Verfahren nach Anspruch 9, **dadurch gekennzeichnet**, daß die zehn Antennen mit Bezug auf eine gedachte Kugel mit festgelegter Äquatorialebene und Nullmeridian wie folgt mit radial zum Kugelmittelpunkt ausgerichteter Antennenachse angeordnet werden:

- vier Antennen werden, beginnend mit dem Nullmeridian, meridional gleichabständig, also mit einem gegenseitigen Winkelabstand von $90°$, auf einem Breitenkreis mit einer Elevation von $+35°$ fixiert,

- vier weitere Antennen werden, beginnend mit einem Meridian von $45°$, meridional gleichabständig, also mit einem gegenseitigen Winkelabstand von $90°$, auf einem Breitenkreis mit einer Elevation von $-35°$ fixiert,

- die zwei restlichen Antennen werden einerseits im einen Pol und andererseits im Gegenpol der gedachten Kugel montiert.

FIG. 1

FIG. 2

EP 0 432 294 A1

FIG. 3

FIG. 4

23

FIG. 5

FIG. 6A

START

$R_{12}^{dB}$ , $\alpha_i$ , $\beta_i$ , $const_1$ , $const_2$

$\Delta \alpha_{13} = \alpha_1 - \alpha_3$ ; $\Delta \alpha_{23} = \alpha_2 - \alpha_3$

$\Delta \beta_{13} = \beta_1 - \beta_3$ ; $\Delta \beta_{23} = \beta_2 - \beta_3$

$\Delta^2 \alpha_{13} = (\Delta \alpha_{13})^2$ ; $\Delta^2 \alpha_{23} = (\Delta \alpha_{23})^2$

$\Delta^2 \beta_{13} = (\Delta \beta_{13})^2$ ; $\Delta^2 \beta_{23} = (\Delta \beta_{23})^2$

K1

a

FIG. 6B

(a)

$$\lambda_{11} = 2 \cdot const_1 \cdot \Delta\alpha_{13} \; ; \; \lambda_{12} = 2 \cdot const_1 \cdot \Delta\beta_{13}$$
$$\lambda_{21} = 2 \cdot const_1 \cdot \Delta\alpha_{23} \; ; \; \lambda_{22} = 2 \cdot const_1 \cdot \Delta\beta_{23}$$

$$D = \lambda_{11} \cdot \lambda_{22} - \lambda_{12} \cdot \lambda_{21}$$

$$c_1 = R_{dB}^{13} + const_1 \cdot (\Delta^2\alpha_{13} + \Delta^2\beta_{13})$$
$$c_2 = R_{dB}^{23} + const_1 \cdot (\Delta^2\alpha_{23} + \Delta^2\beta_{23})$$

$$\alpha = (c_1 \cdot \lambda_{22} - c_2 \cdot \lambda_{12}) / D$$
$$\beta = (c_2 \cdot \lambda_{11} - c_1 \cdot \lambda_{21}) / D$$

$$cor_1 = const_2 \cdot (\alpha - \Delta\alpha_{13})^2 \cdot (\beta - \Delta\beta_{13})^2$$
$$cor_2 = const_2 \cdot (\alpha - \Delta\alpha_{23})^2 \cdot (\beta - \Delta\beta_{23})^2$$
$$cor_3 = const_3 \cdot \alpha^2 \cdot \beta^2$$

(K2)

$$c_1 = c_1 + const_1 \cdot (cor_1 - cor_3)$$
$$c_2 = c_2 + const_1 \cdot (cor_2 - cor_3)$$

$$\alpha = (c_1 \cdot \lambda_{22} - c_2 \cdot \lambda_{12}) / D + \alpha_3$$
$$\beta = (c_2 \cdot \lambda_{11} - c_1 \cdot \lambda_{21}) / D + \beta_3$$

(K3)

(b)

FIG. 6C

(b)

Berechnung der Winkel α und
β im gewünschten Koordinatensystem

Ausgabe α und β

STOP

FIG. 7

$R_{dB}^{13}, R_{dB}^{23}$
$R_F, \#$

SIGNALPROZESSOR

Digitale Signalvorverarbeitung **1**

DSP - Hardware - Module

$\alpha, \beta$ (Body)

Ablauf - und Lade - Steuerung **3**

General Purpose - Mikroproz.

Transformationen **2**

\MAC   MAC   MAC

'Pythagoras' - Prozessor

ext. Schnittstelle
(V.24 od. Mil-Bus)

$\alpha, \beta$ (Nav.)

FIG. 8

FIG. 9

FIG. 10

FIG. 11

FIG. 12

FIG. 13

FIG. 14

FIG. 15

FIG. 16

2.0 GHz

4.0 GHz

8.0 GHz

16.0 GHz

FIG. 17

# M U S T E R E I N G A B E F I L E

## L C 9 0   -   S I M U L A T I O N

```
A 200
                  0.00                    ALPHA
                  0.00                    BETA
        19      - 45.00        45.00      PSI1, PSI2
        19      - 45.00        45.00      TET1, TET2
        19      - 45.00        45.00      PHI1, PHI2
E 200
A 100                                     DATENSATZNUMMER
        010                               ANZAHL DER ANTENNEN
        001       0.00        35.00       NEUE ANTENNENANORDNUNG
        002      90.00        35.00
        003     180.00        35.00
        004     270.00        35.00
        005      45.00      - 35.00
        006     135.00      - 35.00
        007     225.00      - 35.00
        008     315.00      - 35.00
        009       0.00        90.00
        010       0.00      - 90.00
                  2.00                    FREQUENZ IN GHZ
                 90.00                    3-DB-BEREICH
E 100                                     EINGABEENDE
A 300                                     RESPRE-ANFANG
         F        F                       FLAG FÜR REALE/IDEALE GAUSS-KURVEN T/F
         T                                FLAG FÜR FILE-KOPF AUSGABE
         F        F                       DRUCKAUSGABE ALLER ERGEBNISSE MIT/OHNE
                                          HEADER
         T        T          T            FEHLERBER. UND MAX-MIN-SUCHE MIT/OHNE
                                          PRI/PLO
         T        F          T            HISTOGRAMM-DARSTELLUNG       MIT/OHNE
                                          PRI/PLO
        25       0.50                     KLASSENPARAMETER
E 300
```

FIG. 18

.

.

FIG. 19

WINKELVORGABEN

AZIMUTWINKEL...............ALPHA =        0.00
ELEVATIONSWINKEL...........BETA =         0.00

ANTENNENKONFIGURATION

ANZAHL DER ANTENNEN.......ANTNR =          10
SENDEFREQUENZ (IN GHZ).......F =         8.00
3-DB WINKELBEREICH......BWIDTH =        69.00

| ANTENNENWINKEL : | I | ALPHA | BETA |
|---|---|---|---|
| | 1 | 0.00 | 35.00 |
| | 2 | 90.00 | 35.00 |
| | 3 | 180.00 | 35.00 |
| | 4 | -90.00 | 35.00 |
| | 5 | 45.00 | -35.00 |
| | 6 | 135.00 | -35.00 |
| | 7 | -135.00 | -35.00 |
| | 8 | -45.00 | -35.00 |
| | 9 | 0.00 | 90.00 |
| | 10 | 0.00 | -90.00 |

KONSTANTEN DES BERECHNUNGSALGORITHMUS

NORMIERUNGSKONSTANTE....CONST1 =        8.30
KORREKTURKONSTANTE......CONST2 =       -3.11

SIMULATIONSPARAMETER

|  BEREICH | | INTERVALLZAHL |
|---|---|---|
| -45.0 | 45.0 | 18 |
| -45.0 | 45.0 | 18 |
| -45.0 | 45.0 | 18 |

AUSWAHLKRITERIUM

DIGITALISIERTE ANTENNENDIAGRAMME

FIG. 20

STATISTISCHE AUSWERTUNG FUER DIE FEHLER
IN AZIMUT UND ELEVATION DES SENDERS


ANZAHL DER EINZELFEHLER


6859


MITTELWERTE


| AZIMUT | = | 0.01 |
| ELEVATION | = | 0.12 |


STANDARDABWEICHUNGEN


| AZIMUT | = | 4.93 |
| ELEVATION | = | 4.06 |


GROESSTER FEHLER          LAGEWINKEL


| AZIMUT | = | 14.70 | 0.00 | 0.00 | 45.00 |
| ELEVATION | = | 12.08 | -45.00 | -15.00 | 30.00 |


KLEINSTER FEHLER          LAGEWINKEL


| AZIMUT | = | -14.52 | 10.00 | 15.00 | 40.00 |
| ELEVATION | = | -13.00 | 0.00 | 0.00 | -30.00 |

40

FIG. 21

HISTOGRAMM FUER FEHLER IN AZIMUT

HISTOGRAMM FUER FEHLER IN ELEVATION

FIG. 22A

FIG. 22B

FIG. 23

8-Antennen-Normalkonfiguration

Seitenansicht

35°  1    2    3    4    1

0°
0    90    180    270    360

- 35°  5    6    7    8    5

Elevation

Azimut

Anordnung

FIG. 24

Seitenansicht

Anordnung

FIG. 25

Seitenansicht

Anordnung

FIG. 26

Seitenansicht

Anordnung

FIG. 27

Seitenansicht

Anordnung

FIG. 28

```
FILE: LC90      EIN      A   LITEF VM/SP 4.0 RZ-B SUP 8604


C ****************************************************************
C *         M U S T E R E I N G A B E F I L E                   +
C *           L C 90  - S I M U L A T I O N                     +
C *                                                             +
C *                                                             +
C ****************************************************************
C
A 200
         0.00           ALPHA
         0.00           BETA
   19  -45.00    45.00  PSI1,PSI2
   19  -45.00    45.00  TET1,TET2
   19  -45.00    45.00  PHI1,PHI2
E 200
A 100                   DATENSATZNUMMER
   010                  ANZAHL DER ANTENNEN
   001   0.00    35.00   NEUE ANTENNENANORDNUNG
   002  90.00    35.00
   003 180.00    35.00
   004 270.00    35.00
   005  45.00   -35.00
   006 135.00   -35.00
   007 225.00   -35.00
   008 315.00   -35.00
   009   0.00    90.00
   010   0.00   -90.00
         8.00           FREQENZ IN GHZ
        69.00           3-DB-BEREICH
E 100                   EINGABEENDE
A 300                   RESPRE-ANFANG
    T    T              FLAG FUER REALE/IDEALE GAUSS-KURVEN  T/F
    T                   FLAG FUER FILE-KOPF AUSGABE
    F    F              DRUCKAUSGABE ALLER ERGEBNISSE MIT/OHNE HEADER
    T    T    T         FEHLERBER. UND MAX-MIN-SUCHE  MIT/OHNE PRI/PLO
    T    F    T         HISTOGRAMM-DARSTELLUNG         MIT/OHNE PRI/PLO
   30    0.50           KLASSENPARAMETER
E 300
```

FIG. 29

WINKELVORGABEN

AZIMUTWINKEL.............ALPHA =      0.00
ELEVATIONSWINKEL.........BETA =      0.00

ANTENNENKONFIGURATION

ANZAHL DER ANTENNEN......ANTNR =         10
SENDEFREQUENZ (IN GHZ).......F =       2.00
3-DB WINKELBEREICH......BWIDTH =      90.00

| ANTENNENWINKEL : | I | ALPHA | BETA |
|---|---|---|---|
| | 1 | 0.00 | 35.00 |
| | 2 | 90.00 | 35.00 |
| | 3 | 180.00 | 35.00 |
| | 4 | -90.00 | 35.00 |
| | 5 | 45.00 | -35.00 |
| | 6 | 135.00 | -35.00 |
| | 7 | -135.00 | -35.00 |
| | 8 | -45.00 | -35.00 |
| | 9 | 0.00 | 90.00 |
| | 10 | 0.00 | -90.00 |

KONSTANTEN DES BERECHNUNGSALGORITHMUS

NORMIERUNGSKONSTANTE....CONST1 =       4.88
KORREKTURKONSTANTE......CONST2 =      -1.83

SIMULATIONSPARAMETER

| BEREICH | | INTERVALLZAHL |
|---|---|---|
| -45.0 | 45.0 | 18 |
| -45.0 | 45.0 | 18 |
| -45.0 | 45.0 | 18 |

AUSWAHLKRITERIUM

IDEALE GAUSS-KURVE

FIG. 30

STATISTISCHE AUSWERTUNG FUER DIE FEHLER
IN AZIMUT UND ELEVATION DES SENDERS

ANZAHL DER EINZELFEHLER

6859

MITTELWERTE

AZIMUT     =     -0.09
ELEVATION  =     -0.34

STANDARDABWEICHUNGEN

AZIMUT     =     5.21
ELEVATION  =     5.85

GROESSTER FEHLER          LAGEWINKEL

AZIMUT     =     18.73        20.00    40.00    30.00
ELEVATION  =     22.01       -35.00     0.00   -45.00

KLEINSTER FEHLER          LAGEWINKEL

AZIMUT     =     -21.75      -25.00   -45.00    25.00
ELEVATION  =     -21.13       15.00    30.00    30.00

HISTOGRAMM FUER FEHLER IN ELEVATION

FIG. 31

FIG. 32A

FIG. 32B

FIG. 33

| Nr. | Konfiguration | Bereiche | RMS ° | Max ° | Min ° | Fehler (%) >10 | > 5 | Bemerkungen |
|---|---|---|---|---|---|---|---|---|
| 1 | 8-Ant-Normal | ± 10° für ψ,φ,θ | 3.9 | 6.4 | - 6.4 | 0 | 19 | α |
| | | | 0.5 | 1.2 | - 1.2 | 0 | 0 | ß |
| | | ± 30° | 5.6 | 13.0 | - 12.8 | 7 | 40 | |
| | | | 2.6 | 7.7 | - 7.7 | 0 | 5 | . |
| | | ± 45° | | | | | | Singulär |
| 2 | 8-Ant-versetzt | ± 10° für ψ,φ,θ | 0.5 | 1.7 | - 1.6 | 0 | 0 | |
| | | | 1.0 | 1.7 | - 2.2 | 0 | 0 | |
| | | ± 30° | | | | | | Singulär |
| | | ± 30 für ψ,φ ± 10 für θ | 2.2 | 8.5 | - 8.5 | 0 | 5 | |
| | | | 2.0 | 3.5 | - 6.7 | 0 | 3 | |
| 3 | 8-Ant-doppelt-versetzt | ± 10° | 0.5 | 1.4 | - 1.9 | 0 | 0 | |
| | | | 1.1 | 1.7 | - 2.6 | 0 | 0 | |
| | | ± 30° | 16.6 | 175.0 | - 177.3 | 5 | 23 | |
| | | | 8.2 | 83.0 | - 87.5 | 5 | 25 | |
| | | ± 45° | 33.9 | 179.1 | - 179.2 | 14 | 29 | |
| | | | 14.3 | 87.4 | - 88.0 | 13 | 35 | |
| 4 | 8-Ant mit 2 Spitzen-antennen | ± 30° für ψ,φ,θ | 4.5 | 16.8 | - 16.8 | 4 | 24 | |
| | | | 5.8 | 14.0 | - 23.7 | 10 | 34 | |
| | | ± 45° | 6.2 | 21.7 | - 21.7 | 13 | 33 | . |
| | | | 6.6 | 16.5 | - 23.7 | 15 | 38 | |
| | | ± 45 für ψ,φ Θ = 0 | 3.8 | 12.8 | - 12.8 | 3 | 18 | |
| | | | 4.1 | 7.7 | - 12.7 | 3 | 22 | |
| 5 | 10-Ant | ± 10° | 0.5 | 1.7 | - 1.6 | 0 | 0 | |
| | | | 1.0 | 1.7 | - 2.2 | 0 | 0 | |
| | | ± 30° | 4.0 | 13.1 | - 12.9 | 3 | 20 | |
| | | | 3.4 | 9.4 | - 13.0 | 1 | 14 | |
| | | ± 45° | 4.9 | 14.7 | - 14.5 | 6 | 29 | |
| | | | 4.0 | 12.2 | - 13.0 | 2 | 23 | |

FIG. 34

| Nr. | Antenne | Bereiche | RMS ·° | Max ° | Min ° | Fehler (%) > 10°   > 5° | | Bemerkungen |
|---|---|---|---|---|---|---|---|---|
| 6 | 2 GHz<br>79° dB-<br>Bereich | ± 10°<br>für ψ, φ, Θ | 9.7<br>9.8 | 23.5<br>33.8 | - 23.5<br>- 21.2 | 34<br>39 | 61<br>66 | |
|  |  | ± 45°<br>für ψ, φ, Θ | 11.4<br>12.2 | 70.8<br>40.2 | - 67.1<br>- 41.6 | 34<br>42 | 63<br>68 | |
| 7 | 4 GHz<br>78° dB-<br>Bereich | ± 45°<br>für ψ, φ, Θ | 8.7<br>12.0 | 65.3<br>40.3 | - 65.3<br>- 43.7 | 16<br>44 | 44<br>74 | |
| 8 | 8 GHz<br>69° dB-<br>Bereich | ± 10°<br>für ψ, φ, Θ | 2.4<br>2.2 | 7.1<br>9.0 | - 7.1<br>- 5.0 | 0<br>0 | 5<br>10 | |
|  |  | ± 45°<br>für ψ, φ, Θ | 5.2<br>5.9 | 18.7<br>22.0 | - 21.8<br>- 21.1 | 8<br>9 | 27<br>38 | |
| 9 | 16 GHz<br>80° dB-<br>Bereich | ± 45°<br>für ψ, φ, Θ | 15.2<br>14.8 | 75.8<br>71.4 | - 82.9<br>- 74.9 | 53<br>52 | 76<br>71 | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 366 483 (HAGEDON et al.)<br>* Insgesamt *<br>--- | 1-3 | G 01 S 3/30 |
| Y | EP-A-0 002 076 (H.S.A. B.V.)<br>* Insgesamt *<br>--- | 1-3 | |
| A | US-A-4 210 913 (NEWHOUSE et al.)<br>* Insgesamt *<br>--- | 1,2 | |
| A | US-A-4 393 382 (JONES)<br>* Zusammenfassung; Figuren 1,2 *<br>----- | 1 | |

RECHERCHIERTE SACHGEBIETE (Int. Cl.5)

G 01 S

Der vorliegende Recherchenbericht wurde für alle Patentansprüche erstellt

| Recherchenort | Abschlußdatum der Recherche | Prüfer |
|---|---|---|
| DEN HAAG | 09-08-1990 | BLONDEL F.J.M.L.J. |